(19) Europäisches Patentamt
European Patent Office
Office européen des brevets

(11) **EP 3 665 463 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **18755426.6**

(22) Anmeldetag: **09.08.2018**

(51) Int Cl.:
*G01M 5/00* *(2006.01)*      *G01M 11/08* *(2006.01)*
*G01M 7/02* *(2006.01)*      *G01C 15/00* *(2006.01)*
*G01S 17/10* *(2020.01)*     *G01S 17/36* *(2006.01)*
*G01S 7/48* *(2006.01)*

(86) Internationale Anmeldenummer:
**PCT/EP2018/071629**

(87) Internationale Veröffentlichungsnummer:
**WO 2019/030325 (14.02.2019 Gazette 2019/07)**

(54) **VERFAHREN ZUR ANALYSE UND/ODER ÜBERWACHUNG VON BRÜCKEN SOWIE ENTSPRECHENDES SYSTEM UND VERWENDUNG DES SYSTEMS UND/ODER DES VERFAHRENS**

METHOD FOR ANALYSING OR/AND MONITORING BRIDGES, CORRESONDING APPARATUS AND USE OF METHOD AND/OR APPARATUS

PROCÉDÉ POUR L'ANALYSE ET/OU LE CONTRÔLE DE PONTS, DISPOSITIF ET USAGE DU PROCÉDÉ ET/OU DU DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2017 DE 102017118230**

(43) Veröffentlichungstag der Anmeldung:
**17.06.2020 Patentblatt 2020/25**

(73) Patentinhaber:
• **Lucks, Christoph**
**22303 Hamburg (DE)**
• **Bruhnsen, Paul**
**22303 Hamburg (DE)**

(72) Erfinder: **LUCKS, Christoph**
**22303 Hamburg (DE)**

(74) Vertreter: **Raffay & Fleck**
**Patentanwälte**
**Grosse Bleichen 8**
**20354 Hamburg (DE)**

(56) Entgegenhaltungen:
CN-A- 101 696 912      US-A1- 2008 030 710
US-A1- 2015 226 633

• **FENG DONGMING ET AL: "Experimental validation of cost-effective vision-based structural health monitoring", MECHANICAL SYSTEMS AND SIGNAL PROCESSING, Bd. 88, 26. November 2016 (2016-11-26), Seiten 199-211, XP029857718, ISSN: 0888-3270, DOI: 10.1016/J.YMSSP.2016.11.021**

**Beschreibung**

Die vorliegende Erfindung betrifft ein Verfahren zur Analyse und/oder Überwachung von Brücken sowie ein entsprechendes System und eine entsprechende Verwendung.

Aus dem Stand der Technik sind zahlreiche Verfahren zur Analyse von Brücken bekannt, insbesondere solche, bei denen die Auslenkung der Brücke oder einiger Elemente der Brücke durch bekannte Gewichte erfasst werden. Auch sind solche Verfahren, beispielsweise aus der US 2015/0198502, bekannt, bei denen die im normalen Betrieb vorhandene Verkehrslast und die Auslenkung der Brücke durch die Verkehrslast untersucht werden. Aus der US 2015/226633 A1 ist ein Verfahren bekannt, bei dem anhand der Mittelwerte und Standardabweichungen der Dehnungen einer Brücke Kontrollintervalle gebildet werden. Werte, welche aus den Kontrollintervallen herausragen sind ein Hinweis auf eine Beschädigung der Brücke.

Auch ist es bekannt, aus dem Rückstellverhalten auf die Alterung zu schließen. Die Aufgabe der vorliegenden Erfindung ist es, ein Verfahren zur Analyse und insbesondere kontinuierlichen und kontaktlosen Überwachung bzw. Überwachung von Brücken und ein entsprechendes System anzugeben, das auf besonders einfache wie zuverlässige Weise aufgebaut und nachrüstbar ist, insbesondere ohne auf eine weitere Vorrichtung und/oder Sensoren zur Verkehrslastüberwachung angewiesen zu sein.

Gelöst wird die Aufgabe durch ein Verfahren gemäß Anspruch 1 sowie ein System nach Anspruch 13.

Die abhängigen Ansprüche geben vorteilhafte Weiterbildungen an.

Gelöst wird die Aufgabe durch ein Verfahren zur Analyse und/oder Überwachung von Brücken, insbesondere für Landfahrzeuge, zur kontinuierlichen Überwachung von Brücken für Landfahrzeuge, wobei die Brücke insbesondere mindestens einen Fahrspurabschnitt einer Fahrspur aufweist, wobei die Biegung mindestens eines Elementes der Brücke kontinuierlich und kontaktlos erfasst und gespeichert wird. Die Biegung mindestens eines Elements der Brücke wird als eine Auslenkung des mindestens einen Elements der Brücke erfasst. Es wird eine rückschauende Ermittlung von minimalen Biegungen und ein Vergleich von zumindest Teilmengen der ermittelten minimalen Biegungen durchgeführt.

Das erfindungsgemäße Verfahren bzw. System und die erfindungsgemäße Verwendung sind unter anderem daher überlegen, dass sie eine kontinuierliche Überwachung durch oder Analyse ohne Sperrung der Brücke ermöglichen kann.

Des Weiteren ist die Erfindung überlegen, da sie Einzel- und/oder Extremereignisse ebenso erfasst. Außerdem werden Schwankungen durch die kontinuierliche Erfassung und das Vergleichen, berücksichtigt. Schwankungen können dabei insbesondere aufgrund von Temperaturschwankungen ausgelöst werden. Insbesondere können die Auslenkungen und/oder die Biegung durch Messen der Temperatur um den Temperatureinfluss bereinigt werden. Dazu kann sich einer näherungsweisen Formel bedient werden, die den Temperatureinfluss beschreibt, zum Beispiel ist zu erwarten, dass bei einer erhöhten Temperatur ebenso eine erhöhte Biegung bei gleicher Verkehrslast erfolgen wird, weshalb eine Formel eine proportionale Abhängigkeit zum Beispiel in Form von $B(erfasst) = B(F) \cdot a \cdot T\_$, also die erfasste Biegung, die proportional (mit einem Faktor a) abhängig ist von der Temperatur und einer Biegung, die wiederum abhängig ist von einer auf das Element einwirkenden Kraft (F).

Alternativ kann beispielsweise mittels der erfassten Biegungen auf eine Temperaturschwankung geschlossen werden und/oder können die erfassten Biegungen und/oder die ermittelten minimalen Biegungen rückschauend vom Temperatureinfluss bereinigt werden.

Eine Biegung kann insbesondere durch eine Auslenkung des Elements der Brücke gegeben sein und/oder mittels einer solchen erfasst werden. Insbesondere kann eine Biegung des Elements der Brücke aufgrund einer auf das Element der Brücke und/oder auf die Brücke von außerhalb des Elements der Brücke und/oder der Brücke einwirkenden Kraft, insbesondere einer daraus resultierenden Auslenkung und/oder Beeinflussung der Auslenkung des Elements der Brücke, gegeben sein und/oder erfasst werden. Mit Vorzug wirkt eine solche von außerhalb des Elements wirkende Kraft aufgrund des Gewichts anderer Teile der Brücke als das Element der Brücke und/oder durch Verkehrslast, insbesondere auf, an und/oder unter der Brücke, durch Winde, Temperaturschwankung, Raumwellen und/oder Oberflächenwellen innerhalb des Erdkörpers, durch Witterung, Schnee und/oder Regen auf das Element der Brücke bzw. die Brücke ein. Insbesondere handelt es sich bei der Verkehrslast um eine Last aufgrund von Fahrzeugen jeglicher Art, insbesondere Land-, Wasser- und/oder Luftfahrzeugen, die sich auf, an oder unter der Brücke aufhalten und/oder diese überqueren. Dies beinhaltet beispielsweise auch mit der Brücke kollidierende Fahrzeuge, insbesondere Schiffe.

Eine Biegung kann beispielsweise durch eine Auslenkung des Elements, insbesondere aus dem unbelasteten Zustand, insbesondere ohne Verkehrslast, heraus, insbesondere in Richtung der Vertikalen, insbesondere von einer Nulllage aus, insbesondere von einer Nulllage aus nach unten, gegeben und/oder durch die Erfassung der Auslenkung erfasst werden. Auch denkbar ist, dass die Biegung durch einen Winkel am Element und/oder durch eine Dehnung des Elements und/oder eine Strecke zu dem Element und/oder gegen einen/eines/zu einem daran befestigten Messstreifens und/oder Elements, insbesondere von einer Nulllage aus, gegeben und/oder durch die Erfassung des Winkels und/oder Dehnung erfasst werden.

Mit Vorzug kann das Element eine gewinkelte Fläche aufweisen, deren Winkel zur Längserstreckung der Brücke oder einer Messanordnung zur Erfassung der Auslenkung des Elements insbesondere bekannt sein kann. Dabei kann mit Vorzug die Fläche des Elements einen Winkel, insbesondere Anstellwinkel, zur Längserstreckung der Brücke oder einer Messanordnung zur Erfassung der Auslenkung des Elements zwischen 20° und 80°, insbesondere zwischen 30° und 60°, insbesondere veränderbar einstellbar, betragen.

Dabei kann die kontaktlose Erfassung beispielsweise mittels Laser, elektromagnetischer Welle, optisch und/oder akustisch Welle erfolgen, insbesondere durch Erfassung der Bewegung eines Messziels, Targets, insbesondere relativ zu einer vorgegebenen, insbesondere ortsfesten, Position, beispielsweise relativ zu einem Brückenpfeiler und/oder -kopf.

Insbesondere kann die kontaktlose Erfassung mittels eines Lasers erfolgen, wobei lediglich eine Laufzeitmessung des Laserstrahls vorgenommen wird. Alternativ oder zusätzlich neben einer reinen Laufzeitmessung des Laserstrahls kann eine Phasenvergleichsmessung des Laserstrahls, insbesondere des reflektierten Laserstrahls, erfolgen. Eine solche Kombination wird üblicherweise als Pulsrückmischverfahren (pulse reflection mixing method) beschrieben, in welcher insbesondere ein Phasenlaufzeitverfahren mit einem Impulslaufzeitverfahren kombiniert wird. Hierzu wird insbesondere ein kleiner Anteil der Impulsfolge als eine Referenzimpulsfolge ausgekoppelt in eine bekannte Referenzstrecke geleitet und daraufhin auf einen Lichtdetektor geleitet und ausgewertet, insbesondere zusammen bzw. im Zusammenhang mit der restlichen Impulsfolge ausgewertet.

Mit Vorzug kann die kontinuierliche und kontaktlose Erfassung der Biegung mittels Erfassung eines ausgestrahlten und eines reflektierten Laserstrahls eines Lasers erfolgen. Insbesondere ist der reflektierte Laserstrahl der aufgrund einer Reflexion des ausgestrahlten Laserstrahls rückstrahlende, also reflektierte, Laserstrahl. Demnach kann mit Vorzug die kontinuierliche und kontaktlose Erfassung der Biegung mittels Erfassung eines ausgestrahlten und des reflektierten ausgestrahlten Laserstrahls eines Lasers erfolgen. Dabei ist die Verwendung eines Lasers im Vergleich zu anderen Instrumenten vorteilhaft, weil der Laser eine intensive, starke, und gebündelte elektromagnetische Welle bereitstellt. Diese werden gegenüber anderen Methoden der Emission von elektromagnetischen, akustischen und optischen Wellen und deren Instrumente derzeit als überlegen angesehen, insbesondere bei Betrachtung von entfernteren (mehr als 10 m entfernten) Objekten oder bei Betrachtungen, in denen zwischen Zielobjekt und Emissionsort den Strahl brechende Medien vorhanden sein können.

Mit Vorzug kann für die kontinuierliche und kontaktlose Erfassung der Biegung die, insbesondere nur die, Laufzeit eines ausgestrahlten Laserstrahls und eines reflektierten Laserstrahls eines Lasers gemessen werden. Mit Vorzug kann für die kontinuierliche und kontaktlose Erfassung der Biegung die, insbesondere nur die, Laufzeit eines auf zumindest einen Teil des Elements der Brücke ausgestrahlten und eines von diesem Teil des Elements der Brücke reflektierten Laserstrahls eines Lasers gemessen werden, insbesondere für die Zurücklegung von einem ersten Ort zu diesem Teil und zurück zu dem ersten Ort. Vorteilhafterweise ist der reflektierte Laserstrahl der an diesem Teil reflektierte ausgestrahlte Laserstrahl. Demnach kann mit Vorzug für die kontinuierliche und kontaktlose Erfassung der Biegung die, insbesondere nur die, Laufzeit eines auf zumindest einen Teil des Elements der Brücke ausgestrahlten und des von diesem Teil des Elements der Brücke reflektierten ausgestrahlten Laserstrahls eines Lasers gemessen werden. Die Laufzeitmessung stellt dabei die einfachste und und kostengünstige Methode der Erfassung eines Signals eines Laserstrahls dar. Sollte nur die Laufzeitmessung durchgeführt werden, so ist das gesamte Verfahren sehr einfach und kostengünstig, sowie mit kostengünstigen Laser- und Detektionssystem(en) realisierbar. Durch die Laufzeitmessung kann eine Entfernung erfasst werden, die direkt und/oder indirekt, insbesondere über eine, insbesondere bekannte, geometrische Beziehung die Durchbiegung der Brücke, zumindest relativ, angibt. Es kann aber auch allein die Laufzeit als Maß für die Biegung, ohne entsprechende Umrechnung, verwendet werden.

Mit Vorzug kann für die kontinuierliche und kontaktlose Erfassung der Biegung, insbesondere neben der Laufzeitmessung eines Laserstrahls eines Lasers ebenso, die Phase eines reflektierten Laserstrahls, insbesondere die Phase des auf zumindest einen Teil des Elements der Brücke ausgestrahlten und die Phase des von diesem Teil des Elements der Brücke reflektierten Laserstrahls, gemessen werden und diese Phasen, insbesondere durch Addition und/oder Subtraktion zu einem Maß für die Biegung gewandelt werden. Es kann daraus, auch genauer als mittels Laufzeitmessung, eine Entfernung gemessen werden, die direkt und/oder indirekt insbesondere über eine, insbesondere bekannte, geometrische Beziehung die Durchbiegung der Brücke, zumindest relativ, angibt. Es kann aber auch allein die Phasendifferenz als Maß für die Biegung, ohne entsprechende Umrechnung, verwendet werden. Insbesondere ist der reflektierte Laserstrahl der aufgrund einer an zumindest einem Teil des Elements der Brücke Reflexion des ausgestrahlten Laserstrahls rückstrahlende Laserstrahl. Somit kann mit Vorzug für die kontinuierliche und kontaktlose Erfassung der Biegung, insbesondere neben der Laufzeitmessung eines Laserstrahls eines Lasers ebenso, die Phase des auf zumindest einen Teil des Elements der Brücke ausgestrahlten und des von diesem Teil des Elements der Brücke reflektierten ausgestrahlten Laserstrahls gemessen werden. Vorteilhafterweise wird zusätzlich die Laufzeit und Phase eines auf einen Referenzpunkt entlang einer Referenzstrecke ausgestrahlten und von diesem Referenzpunkt reflektierten Laserstrahls gemessen. Dabei kann diese Referenzstrecke innerhalb eines geschützten und kontrollierten Bereichs entlang laufen, insbesondere innerhalb des Gerätes. Mithilfe einer solchen Kombination der Messung der Laufzeit und der Phase kann das Pulsrückmischverfahren durchgeführt werden.

Dabei kann berücksichtigt werden, dass die erfassten Biegungen und/oder die ermittelten minimalen Biegungen gegebenenfalls auch durch Änderungen äußerer Bedingungen, z. B. Temperaturänderungen, bedingt sind. Unter äußeren Bedingungen sind insbesondere Verkehrslasten nicht zu verstehen. Vorteilhafterweise können die die Biegungen und/oder minimalen Biegungen um den Einfluss der äußeren Bedingungsänderungen, z. B. Temperaturschwankungen, korrigiert werden. Eine Korrektur kann vorteilhaft sein, wenn aufgrund von anderen äußeren Umständen die Messanordnung, wie zum Beispiel der Messweg, zur Erfassung der Auslenkung der Elemente geändert wird oder die Eigenschaften der Brücke, wie beispielsweise die Steifigkeit und/oder Ausdehnung, temporären Änderungen unterliegen, die durch solche äußere Bedingungen verursacht werden. Dabei können nicht lineare Effekte vernachlässigt werden. Beispielhaft sei hier eine Temperaturänderung innerhalb eines Tages, innerhalb der Jahreszeiten oder innerhalb eines Jahres erwähnt, wodurch sich gegebenenfalls Abstände vom Ausgangspunkt der Erfassung, z. B. einem Laser, hin zum Element der Brücke aufgrund von temperaturbedingten Dehnungen der Einzelteile der Brücke ändern. Eine Korrektur der erfassten Biegungen und/oder ermittelten minimalen Biegungen kann beispielsweise allein aufgrund einer wiederholten und rückschauenden Betrachtung einer Vielzahl von erfassten Biegungen und/oder ermittelten minimalen Biegungen erfolgen. Dabei kann beispielsweise der Umstand genutzt werden, dass eine Änderung der erfassten Biegungen und/oder der ermittelten minimalen Biegungen im Laufe der Zeit sich zunächst zu einem Wertebereich hin verändern und danach wieder Richtung Ausgangwertebereich ändern, sich somit bei einem entsprechend großen betrachteten Zeitintervall das gesamte Verhalten erkennen lässt und die Änderungen sich mit einer üblichen Regressionskorrektur herausrechnen lassen. Zudem können die Änderungen zumindest in einer kontinuierlichen Überwachung mit entsprechend kurzen Abständen zwischen einzelnen Messpunkten als geringe Änderung pro Zeit erkennbar sein und nicht etwa als große Änderung pro Zeit wie in etwa bei einer aufgetretenen Verkehrslast. Beispielsweise ist das Verfahren und/oder das System so eingerichtet, dass Biegungen in kurzen Abständen, insbesondere mindestens eine Erfassung einer Biegung innerhalb dreißig Minuten, insbesondere zehn Minuten, insbesondere innerhalb einer Minute, erfasst werden, wodurch zwischen langperiodischen und kurzperiodischen Auslenkungen und/oder Biegungen unterscheiden werden kann, wobei insbesondere den kurz periodischen Auslenkungen und/oder Biegungen Verkehrslasten und/oder den lang periodischen Temperaturschwankungen an der Brücke zugeordnet werden. Kurz periodischen Auslenkungen und/oder Biegungen sind insbesondere dadurch gekennzeichnet, dass ein lokales Maximum und/oder Minimum der erfassten Biegungen und/oder die maximale und/oder minimale Auslenkung des Elements innerhalb eines Zeitintervalls, insbesondere eines Zeitintervalls bis zum nächsten lokalen Maximum und/oder Minimum der erfassten Biegungen und/oder bis zur nächsten maximalen und/oder minimalen Auslenkung des Elements, erfasst wird, wobei das Zeitintervall weniger als sechzig, insbesondere dreißig, mit Vorzu zehn, Minuten beträgt. Beispielsweise kann das Verfahren und/oder System eine Messanordnung zur Erfassung der Biegung des Elements aufweisen, wobei wiederholt rückschauend die erfassten Biegungen und/oder wiederholt vergleichend zumindest Teilmengen der minimalen Biegungen innerhalb eines Zeitintervalls auf Ihren zeitlichen Verlauf analysiert und stetige Veränderungen des Mittelwerts der erfassten Biegungen und/oder der minimalen Biegungen innerhalb von zumindest kleinen zeitlichen Abschnitten zur Ermittlung von Veränderung der Messanordnung benutzt werden. Auch können relevante äußere, beispielsweise die Umgebungstemperatur, erfasst und ihr Einfluss über ein entsprechendes Rechenmodell errechnet und die Biegungen entsprechend korrigiert werden.

Mit Vorzug kann das Verfahren und/oder die Vorrichtung mindestens zwei Elemente überwachen und/oder analysieren und erfasst es die Biegungen als die Auslenkungen der mindestens zwei Elemente. Insbesondere können die mindestens zwei Elemente so angeordnet sein, dass das zweite Element entlang einer Längserstreckung der Brücke nach dem ersten Element angeordnet ist, bzw. alternativ ausgedrückt insbesondere das zweite Element im weiteren Verlauf der Längserstreckung der Brücke nach dem ersten Element angeordnet ist. Beispielsweise kann durch einen Vergleich des Begins einer Biegung oder der zeitlichen Verläufe der Biegungen an den Elementen zwischen einem ersten Element und zweiten Element auf eine Geschwindigkeit der die Auslenkung verursachenden Größe, beispielsweise Verkehrslast, geschlossen werden, wie z. B. auf die Geschwindigkeit der Verkehrslasten, insbesondere der Landfahrzeuge auf der Brücke.

Auch können die Biegungen oder Auslenkungen oder deren Veränderung mindestens zweier Elemente verglichen werden, um Abweichungen zwischen den Elementen oder deren Alterung zu erkennen.

Kontinuierlich ist eine Erfassung insbesondere, wenn über einen langen Zeitabschnitt, insbesondere von mindestens 24 Stunden, insbesondere mindestens 4 Wochen, wiederkehrend Messwerte durch die selbe Messung, insbesondere über die selbe Messanordnung, erfasst werden, insbesondere mit einem maximalen Abstand zwischen jeweils zwei aufeinander folgenden Messungen von 360 s, insbesondere maximal 60 s.

Eine Speicherung der erfassten Biegungen kann auf unterschiedlichste Weise, beispielsweise auf einer Festplatte, Flashspeicher und/oder im Arbeitsspeicher, vor Ort und/oder entfernt, beispielsweise zentral für zahlreiche Brücken und/oder in der Cloud erfolgen. Ein Speichern schließt ein späteres Löschen nicht aus. Beispielsweise können gespeicherte Biegungen teilweise oder vollständig gelöscht werden, wenn bezüglich dieser die minimalen Biegungen ermittelt wurden.

So kann beispielsweise Speicherplatz gespart werden, indem anstelle der Biegungen aus mindestens einem zurückliegenden Zeitraum oder einer Zeitdauer für die weitere Durchführung des Verfahrens die ermittelten minimalen Biegungen gespeichert werden. So stehen diese minimalen Biegungen für den Vergleich weiterhin zur Verfügung. Ein solches Löschen kann beispielsweise nach jeder rückschauenden Ermittlung erfolgen, wobei dabei insbesondere nicht alle bei der rückschauenden Betrachtung berücksichtigten erfassten Biegungen gelöscht werden, insbesondere eine vorgegebene Anzahl letzter erfasster Biegungen oder erfasste Biegungen aus einem vorgegebenen Zeitraum und/oder einer vorgegebenen Zeitspanne nicht gelöscht werden.

Grundsätzlich kann es ausreichen zur Ermittlung von minimalen Biegungen auf erfasste Biegungen rückschauend zurückzugreifen, welche insbesondere zuvor noch nicht als minimale Biegung angesehen wurden, oder anders ausgedrückt wiederholt rückschauend können minimale Biegungen aus erfassten Biegungen ermittelt werden. Insbesondere wird rückschauend aus den gespeicherten Biegungen, was alle gespeicherte Biegungen umfassen kann oder auch nur Teilmengen der gespeicherten Biegungen umfassen kann, wobei die Teilmengen insbesondere durch gespeicherte Biegungen aus mindestens einem Zeitabschnitt gebildet werden, insbesondere durch solche oder alles aus einem Zeitabschnitt vor, insbesondere unmittelbar vor, der Ermittlung der minimalen Biegung, insbesondere mit einer Zeitdauer von einer Stunde bis einem Jahr, insbesondere von 8 Stunden und einem Jahr.

Eine rückschauende Ermittlung kann kontinuierlich oder zu vorbestimmten und/oder zu durch andere Ereignisse und/oder Zustände bestimmte Zeitpunkte erfolgen, beispielsweise definiert durch Zeitspannen zwischen zwei rückschauenden Ermittlungen, die wiederum abhängig sein können von anderen Parametern, wie Alter der Brücke, Verkehrslast, Biegung und/oder Temperatur. Auch kann eine rückschauende Ermittlung beispielsweise nur und/oder immer dann erfolgen, wenn ausreichend freie und/oder günstige Rechenkapazität zur Verfügung steht.

Eine rückschauende Ermittlung ermöglicht es, die Entwicklung, insbesondere der weiteren Biegungen, nach einem Messwert, insbesondere vor und/oder nach einer ersten Biegung, mit in die Betrachtung einfließen zu lassen. Somit kann beispielsweise ein dynamischer Mittelwert der minimalen Biegung oder einer oder mehrere Teilmengen der Biegung ermittelt werden, insbesondere um daraus und/oder mittels diesem die minimalen Biegungen zu ermitteln. Dabei ist/sind der/die Mittelwerte insbesondere dynamisch insofern, als das sich die mindestens eine Teilenge ändert, insbesondere der Art, dass Anzahl der enthaltenden erfassten und gespeicherten Biegungen konstant bleibt, sich aber die jeweils enthaltenden erfassten und gespeicherten Biegungen ändert. Insbesondere beinhalten Teilmengen mindestens 5 und/oder maximal 300000 Biegungen und/oder Biegungen aus einem Zeitintervall von mindestens 1 min und/oder maximal eine Woche. In einer möglichen Ausgestaltung wird die rückschauende Betrachtung derart durchgeführt, dass als minimale Biegung nur Biegungen angesehen werden können, nach deren Erfassung mindestens 3 weitere Biegungen und/oder über mindestens 59 Sekunden weitere Biegungen erfasst wurden und/oder werden und/oder bei der rückschauenden Ermittlung berücksichtigt werden.

Bei einem Mittelwert mehrerer erfasster Biegungen, insbesondere im statistischem Sinne einer Population von erfassten Biegungen, kann es sich zum Beispiel um den Median, den Modus, das arithmetische Mittel, quadratische Mittel oder geometrische Mittel handeln, insbesondere aller erfassten und (noch) gespeicherten Biegungen oder einer Teilmenge der erfassten und (noch) gespeicherten Biegungen handeln, wobei einzelne erfasste Biegungen entweder ungewichtet in einen der zuvor genannten Mittelwerte einfließen können oder auch gewichtet werden können, somit es sich bei einem Mittelwert mehrerer erfasster Biegungen beispielsweise auch ein gewichtete(r/s) Median, Modus, arithmetisches Mittel, quadratisches Mittel oder geometrisches Mittel handeln kann.

Insbesondere wird/werden die minimale(n) Biegung(en) mittels eines dynamischen Mittelwerts der erfassten Biegungen, insbesondere innerhalb eines vorbestimmten und/oder dynamischen Zeitintervalls, ermittelt, insbesondere der Art, dass die Datenbasis, auf der der Mittelwert bestimmt wird, verändert wird, insbesondere die in der Teilmenge enthaltenen erfassten und gespeicherten Biegungen.

Erfindungsgemäß wird/werden die minimale(n) Biegung(en) mittels eines dynamischen Mittelwertes erfasster Biegungen, insbesondere innerhalb eines vorbestimmten und/oder dynamischen Zeitintervalls ermittelt, wobei der dynamische Mittelwert dadurch gekennzeichnet ist, dass die Ermittlung des dynamischen Mittelwerts iterativ, rückschauend und/oder wiederholt auf eine Teilmenge von erfassten Biegungen aus allen erfassten Biegungen basiert, wobei die Teilmenge mittels einer Betrachtung aller erfassten Biegungen und deren Verlauf und/oder Abweichungen zueinander und/oder zu einem Mittelwert aller erfassten Biegungen innerhalb des Zeitintervall und/oder einer Teilmenge bestimmt wird, wobei solche erfassten Biegungen nicht Teil der Teilmenge sind, die Werte aufweisen, die oberhalb und/oder unterhalb mindestens einer Spanne um den Mittelwert liegen, wobei insbesondere ein erster und/oder ein zweiter und/oder eine weitere Spanne insbesondere dadurch gekennzeichnet ist, dass die Spanne einem vorbestimmten und/oder dynamischen Intervall entspricht und/oder insbesondere die Spanne proportional zu einer Abweichung aller erfassten und (noch) gespeicherten Biegungen und/oder der Teilmenge ist und/oder der Bereich proportional zu der Standardabweichung aller erfassten und (noch) gespeicherten Biegungen zu dem Mittelwert aller Biegungen und/oder der Teilmenge ist.

Insbesondere wird basierend auf einem dynamischen Mittelwert ein Ausschluss von erfassten und (noch) gespeicherten Biegungen aus der weiteren Betrachtung vorgenommen, wobei sich die ausgeschlossenen Biegungen dadurch auszeichnen, dass sie solche erfasste Biegungen darstellen, die unterhalb und/oder oberhalb des dynamischen Mittelwerts liegen und/oder die unterhalb und/oder oberhalb einer vorbestimmten und/oder von dem dynamischen Mittelwert proportional abhängigen Spanne der Abweichungen der erfassten Biegung um den dynamischen Mittelwert liegen und/oder die, wenn mehrere angrenzenden Biegungen als eine Biegungskurve mit einem Maximum und/oder Minimum und/oder Scheitelpunkt definiert ist, ein Maximum und/oder Minimum dieser Biegungskurve unterhalb und/oder oberhalb einer vorbestimmten und/oder von dem dynamischen Mittelwert proportional abhängigen Spanne der Abweichungen der erfassten Biegung um den dynamischen Mittelwert liegen und/oder unterhalb und/oder oberhalb mindestens eines relativen und/oder absoluten Grenzwertes liegen, wobei beispielsweise ein erster Grenzwert für Biegungen oberhalb des ersten Grenzwertes und ein zweiter Grenzwert für Biegungen unterhalb des zweiten Grenzwertes zur Ermittlung einer minimalen Biegung ausgeschlossen werden, wobei insbesondere der erste Grenzwert die gleiche Differenz und/oder den gleichen Abstand vom dynamischen Mittelwert wie der zweite Grenzwert aufweist.

Insbesondere wird basierend auf einem dynamischen Mittelwert ein Ausschluss von erfassten und (noch) gespeicherten Biegungen aus der weiteren Betrachtung vorgenommen, wobei sich die ausgeschlossenen Werte dadurch auszeichnen, dass sie mindestens ... unterhalb und/oder mindestens ... oberhalb des dynamischen Mittelwerts liegen und/oder in einem Zeitintervall, insbesondere von einer Länge zwischen 30 Sekunden und 10 min um eine Biegung, die mindestens ... unterhalb und/oder mindestens ... oberhalb des Mittelwert liegt und/oder die zu, insbesondere als Anstieg und/oder Abfall, einer Auslenkung gehören, die die mindestens ... unterhalb und/oder mindestens ... oberhalb des Mittelwert liegt Insbesondere stellt der dynamischen Mittelwert und/oder stellen die Messwerte die nicht mehr als ... unterhalb und nicht mehr als ... oberhalb des dynamischen Mittelwerts liegen und/oder der dynamischen Mittelwert zu den Messzeiten, zu denen die Biegungen nicht nicht mehr als ... unterhalb und nicht mehr als ... oberhalb des dynamischen Mittelwerts liegen und/oder die Biegungen, die mit dem dynamischen Mittelwert zur Zeit der Messung der Biegung übereinstimmen und/oder eine Abweichung vom Mittelwerte von plus und/oder minus ... aufweisen, die ermittelten minimalen Biegungen dar.

Es können beim Vergleich Teilmengen der ermittelten minimalen Biegungen oder alle ermittelten minimalen Biegungen berücksichtigt werden. Die Teilmengen können nach unterschiedlichen Kriterien bestimmt werden, beispielsweise kann nur eine vorbestimmte Anzahl von ermittelten Minima, insbesondere jüngster ermittelter Minima berücksichtigt werden. Aber auch eine andere Auswahl, beispielsweise aus einer vorbestimmten Zeitspanne, ist denkbar.

Minimale Biegungen sind insbesondere nicht durch streng mathematisch definierte lokale Minima und/oder absolute Minima gegeben.

Beispielsweise kann in Betracht gezogen werden, dass zur Neuberechnung des Mittelwertes etwa 95% aller erfassten und, insbesondere noch, gespeicherten Biegungen oder einer Teilmenge einfließen sollen, weshalb in der untenstehenden Formel für x der Wert zwei (2) einzusetzen ist. Als Teilmenge können beispielsweise die erfassten und gespeicherten Biegungen, deren Werte innerhalb eines symmetrischen beidseitigen $x\sigma$, insbesondere $2\sigma$, Intervalls mit $\sigma$ gleich der Standardabweichung ($\pm x\sigma$, insbesondere $\pm 2\sigma$, Intervall) um den Mittelwert ($\mu$) der Teilmenge Beispielsweise kann eine mathematische Formulierung einer minimalen Biegung ($B_m$) durch folgende Auswahlbedingung ausgewählt werden:

$$B_m = \mu(B_i) \pm 2\sigma(B_i); \, für \, B_i: \; \mu(B) - 2\sigma(B) < \, B_i < \mu(B) + 2\sigma(B)$$

wobei beispielsweise:

$$\mu(B) = \bar{x} = \frac{1}{N}\sum_{i}^{N} B_i$$

und

$$\sigma(B) = d_{\bar{x}} = \frac{1}{N}\sum_{i}^{N} |B_i - \mu|$$

bzw.

$$\sigma(B) = \sqrt{\sigma^2} = \sqrt{\frac{1}{N}\sum_{i}^{N}(B_i - \mu)^2}$$

ist.

Er kann auch berechnet werden als gewichteter oder ungewichteter, insbesondere rückschauender, Mittelwert einer ersten Teilmenge der Biegungen gegeben durch die Biegungen innerhalb eines, insbesondere beidseitig symmetrischen Intervalls um den gewichteten oder ungewichteten, insbesondere rückschauenden, Mittelwert einer zweiten, die erste Teilmenge enthaltenden, Teilmenge liegen. Sofern die erste Teilmenge keinen oder weniger als eine vorbestimmte Menge Biegungen enthält, liegt dann keine minimale Biegung vor. Dabei ist die zweite Teilmenge insbesondere mit der Zeit gleitend ausgestaltet, beinhaltet beispielsweise eine vorbestimmte Anzahl zuletzt erfasster und gespeicherter Biegungen. Die so bestimmten Mittelwerte werden insbesondere einem Zeitpunkt zugeordnet, der innerhalb des Zeitintervalls der Erfassung Biegungen der zweiten Teilmenge liegt, insbesondere einem Zeitpunkt dessen Biegung zumindest bei einer der Mittelwertbildungen stärker gewichtet wird als andere Biegungen oder alle anderen Biegungen, insbesondere dem Zeitpunkt der Erfassung der zeitlich zuerst, zuletzt oder mittig erfassten Biegung der ersten und/oder zweiten Teilmenge.

Eine minimale Biegung kann beispielsweise auch mittels und/oder durch den gewichten oder ungewichteten, insbesondere dynamischen, Mittelwert, insbesondere dem arithmetischen Mittel, aller Biegungen, insbesondere noch nicht zur Ermittlung einer minimalen Biegung herangezogenen, Biegungen und/oder einer Teilmenge , insbesondere in einer Spanne bestimmt werden. Die Spanne kann beispielsweise begrenzt werden, nach oben durch den minimalen Werte der Werte alle lokalen Maxima und nach unten durch den maximalen Wert der Werte aller lokalen Minima der Biegungen oder der Teilmenge. Somit werden extrem Auslenkungen nicht berücksichtigt. Alternativ kann die Spanne und/oder der dynamische Mittelwert beispielsweise mittels der iterativen mathematischen Methode der durschnittlichen absoluten Abweichung oder der Standardabweichung ermittelt werden. Mit Vorzug kann rückschauend und/oder dynamisch ein solches lokales Minimum und/oder lokales Maximum der erfassten und gespeicherten Biegung und/oder eine Biegung von der Ermittlung des Mittelwerts, der Spanne und/oder der absoluten Abweichung ausgeschlossen werden, wenn dieses lokale Minimum und/oder lokale Maximum oder die Biegung einen Wert aufweist, der um mehr als das x-fache, insbesondere x > = 1,5, insbesondere > = 2, der absoluten Abweichung vom Mittelwert abweicht. Danach kann insbesondere ein neuer Mittelwert und eine absolute Abweichung von diesem Mittelwert ohne solche lokale Minima und/oder lokale Maxima und/oder Biegungen, die um mehr als das x-fache der absoluten Abweichung abweichen, ermittelt wird. Beispielsweise kann in Betracht gezogen werden, dass zur Neuberechnung des Mittelwertes etwa 95% aller erfassten und, insbesondere noch, gespeicherten Biegungen mit einfließen sollen, weshalb für x der Wert zwei (2) einzusetzen ist. Mathematisch können beispielsweise nur die lokalen Minima und/oder lokalen Maxima zur Ermittlung der minimalen Biegung herangezogen werden, deren Werte kleiner bzw. größer sind als ein Wert, welcher sich aus dem Mittelwert ($\mu$) aller lokalen Minima und/oder lokalen Maxima der erfassten und gespeicherten Biegungen innerhalb eines Zeitfensters und hierzu addiert bzw. hiervon subtrahiert die x-fache, insbesondere doppelte, Standardabweichung ($\pm x\sigma$, insbesondere $\pm 2\sigma$) aller lokalen Minima und/oder lokalen Maxima der erfassten und gespeicherten Biegungen innerhalb eines Zeitfensters zusammensetzt. Beispielsweise kann eine mathematische Formulierung einer minimalen Biegung

($B_m$) folgendermaßen für die lokalen Minima und/oder lokalen Maxima $(M_i^B)$ der erfassten und gespeicherten Biegung (B) innerhalb eines Zeitintervalls mittels Mittelwert ($\mu$) und Standardabweichung ($\sigma$) erfolgen:

$$B_m = \mu(M_i^B) \pm 2\sigma(M_i^B); f\ddot{u}r\ M_i^B:\ \mu(M^B) - 2\sigma(M^B) <\ M_i^B < \mu(BM^B) + 2\sigma(M^B)$$

wobei beispielsweise:

$$\mu(M^B) = \bar{x} = \frac{1}{N}\sum_{i}^{N}M_i^B$$

und

$$\sigma\left(M^B\right) = d_{\bar{x}} = \frac{1}{N}\sum_{i}^{N}\left|M_i^B - \mu\right|$$

bzw.

$$\sigma\left(M^B\right) = \sqrt{\sigma^2} = \sqrt{\frac{1}{N}\sum_{i}^{N}(M_i^B - \mu)^2}$$

und $M_i^B$ alle (i) lokalen Minima und/oder lokalen Maxima innerhalb eines Zeitintervalls und/oder einer Teilmenge der Biegungen beinhalten, wobei die lokalen Minima und/oder lokalen Maxima sich mathematisch als lokale Extremstellen der erfassten und gespeicherten Biegungen innerhalb des Zeitintervalls oder diesem geometrisch bzw. grafisch gleichkommend beschreiben lassen.

Alternativ stellt insbesondere der dynamischen Mittelwert und/oder stellen die erfassten und gespeicherten Biegungen, die nicht unterhalb eines ersten unteren Grenzwerts und nicht oberhalb eines zweiten oberen Grenzwertes und/oder die nicht mehr als ein erster Grenzwert unterhalb und nicht mehr als ein zweiter Grenzwert oberhalb des dynamischen Mittelwerts liegen, und/oder der dynamischen Mittelwert zu den Zeiten der Erfassung die minimale Biegung dar. Beispielsweise ist es auch möglich nur die lokalen Maxima oder nur die lokalen Minima der erfassten und gespeicherten Biegungen innerhalb des Zeitintervalls zur Ermittlung der minimalen Biegung zu benutzen, da insbesondere davon ausgegangen wird, dass es sich bei der Biegung um eine Schwingung handelt, welche annäherungsweise zu beiden Seiten gleich stark oder zumindest in Relation zueinander gleichstark auslenkt.

Es ist vorstellbar, dass einzelne Elemente der Brücke auf sogenannten Gleitlagern angeordnet sind. Diese Lager dienen zur sicheren Anordnung der einzelnen Elemente, wodurch sich auch bei Temperaturschwankungen und anderen Umwelteinflüssen die Elemente leicht bewegen können und so mögliche auftretende Verschiebungen/Bewegungen/Ausdehnungen keine zusätzlichen Spannungen zwischen Elementen verursachen. Mit Vorzug kann aufgrund des wiederholten Vergleichens von zumindest Teilmengen der ermittelten minimalen Biegungen und/oder Mittelwerten miteinander und/oder des wiederholt rückschauenden Ermittelns der minimalen Biegungen ein Niveausprung der minimalen Biegungen und/oder der erfassten Biegungen als ein Lagersprung der Elemente auf dem Lager ermittelt werden. Dabei zeigt der zeitliche Verlauf einen nicht diskreten, nicht kontinuierlichen Sprung und/oder eine kurzfristige schnelle Änderung in den erfassten Biegungen und/oder ermittelten minimalen Biegungen. Aus der Steigung während dieser kurzfristigen Änderung kann auch die Gleitgeschwindigkeit an den Lagern bestimmt werden. Insbesondere wird ein nicht kontinuierlicher Sprung von einer erfassten Biegung auf die nachfolgende erfasste Biegung als ein Lagersprung interpretiert. Messstrecke Als eine minimale Biegung wird/werden im Sinne der Erfindung die erfasste(n) und gespeicherte(n) Biegung(en) als Auslenkung des Elements der Brücke und/oder daraus abgeleitete Werte ermittelt, welche im Vergleich zu anderen Biegungen des Elements innerhalb eines Zeitintervalls eine kleine bzw. eine kleinere Auslenkung aufweist/aufweisen. In anderen Worten wird/werden die minimale Biegung und/oder die minimalen Biegungen insbesondere aus einer Teilmenge aus der Gesamtmenge der, insbesondere noch, gespeicherten Biegungen ermittelt, wobei die Teilmenge mindestens ein Element und insbesondere in Bezug auf jeweils eine minimale Biegung lediglich Elemente mit in etwa gleichem Wert umfasst, und der Wert des/der Element(s/e) der Teilmenge einen kleinen Wertebereich innerhalb der Gesamtmenge und/oder der noch gespeicherten Biegungen und/oder einer größeren Submenge der, insbesondere noch, gespeicherten Biegungen, aufweist.

Bevorzugt wird nur dann eine minimale Biegung angenommen und/oder ermittelt, wenn die zur Ermittlung minimaler Biegung(en) herangezogene Auslenkung dieser Biegung größer ist als ein Referenzwert. Ein solcher Referenzwert kann insbesondere ein Wert sein, der die Messtoleranz der kontinuierlichen und kontaktlosen Erfassungsanordnung widerspiegelt.

Bevorzugt wird der Wert einer Auslenkung eines Elements als Biegung erfasst/verwendet. Dabei ist der Wert das Maß der Auslenkung und wird üblicherweise in einer Längeneinheit wie Meter angegeben, welche insbesondere angibt, welche Dimension, z. B. in Meter, die Auslenkung des Elements beträgt. Es können aber auch andere für eine solche Biegung aussagekräftige Werte, wie Laufzeiten und/oder Phasenverschiebungen verwendet werden. Vorzugsweise wird jeder Wert einer Auslenkung, welcher jeweils innerhalb eines vorbestimmten und/oder bestimmten Zeitintervalls erfasst und gespeichert wurde, mit allen anderen Werten innerhalb dieses Zeitintervalls verglichen, wobei der kleinste wert oder Wertebereich dieser Werte die minimale Biegung darstellt. Generell ist der kleinste absolute Zahlenwert der Messung, der Auslenkung und/oder Biegung nicht als kleinster Wert zu betrachten, sondern ist der kleinste Wert insbesondere ein solcher, der die geringste Abweichung von einer, insbesondere temporären, Ruhelage aufweist. Eine minimale Biegung ist insbesondere nicht eine solche, die den geringsten Messwert aufweist, sondern eine solche, die die geringste Abweichung von einer, insbesondere temporären, Ruhelage aufweist. Als Ruhelage kann ein Mittelwert, insbesondere ein dynamischer Verwendet werden. Insbesondere können die Messwerte der Biegung zur Ermittlung minimaler Biegungen zunächst, insbesondere durch Subtraktion un/oder Addition eines, insbesondere dynamischen Mittelwert, korrigiert werden, insbesondere derart, dass die, insbesondere temporären, Ruhelage den Werte null aufweist und sich die Biegungen als Schwingung um den Wert null zeigen.

Da das Verfahren beispielsweise bei ständiger Last und/oder ständig wechselnder Last, insbesondere Verkehrslast auf der Brücke, durchgeführt wird, wird eine minimale Biegung in der Regel und/oder insbesondere während einer Restschwingung aufgrund einer vorausgehenden Krafteinwirkung auf die Brücke bzw. das Element der Brücke gemessen worden, stellt jedoch insbesondere nicht eine Auslenkung lediglich aufgrund einer Eigenschwingung der Brücke, welche insbesondere nicht durch eine Last ausgelöst wurde dar. Insbesondere werden auch Biegungen unter Schwingung des Elements und/oder der Brücke als minimale Biegungen angenommen und/oder ermittelt.

Vorzugsweise ist das Zeitintervall bzw. der Start und das Ende dieses Zeitintervalls beliebig anpassbar bzw. aufgrund von Ereignissen auslösbar und anpassbar. Insbesondere ist es vorstellbar, dass aufgrund von besonderer Verkehrslast, Änderungen in der Temperatur, der Windstärke oder anderen Umwelteinflüssen, des Alters der Brücke, externe Eingaben (wie z. B. aufgrund einer Fernauslösung) und/oder aufgrund der Tages/ bzw. Uhrzeit das Zeitintervall bzw. dessen Begin und/oder Ende anpassbar.

Beispielsweise kann das Verfahren und/oder das System und/oder bei der Verwendung der minimalen Biegungen eine Auslenkung eines Elements als Biegung erfasst werden und/oder mittels eine(r) Messstrecke, wobei die Messstrecke von einem Ausgangspunkt auf das Element oder ein an dem Element angebrachtes Objekt, insbesondere, insbesondere reflektierendes, Target, gerichtet ist und dazu eingerichtet ist, eine Auslenkung des Elements, insbesondere Biegung und/oder in vertikaler Richtung, zu erfassen. Beispielsweise kann bei der Benutzung eines Laser zur Erfassung der Auslenkung ein solcher Laser im Aufgangspunkt angeordnet sein und eine Messstrecke ausgehend von diesem Ausgangspunkt auf ein an dem Element angeordnetes, reflektierendes Target gerichtet sein, um die Auslenkung des Elements zu erfassen.

Mit Vorzug werden/sind/werden in dem Verfahren zur Analyse und/oder Überwachung und/oder in dem System zur Analyse und/oder Überwachung und/oder bei der Verwendung der minimalen Biegungen die Biegungen mindestens eines ersten und eines zweiten Elements der Brücke oder werden zeitlich parallel und/oder zeitgleich mittels mindestens zweier Messstrecken mindestens zwei Biegungen an einem Element erfasst/erfassbar/erfasst. Mit Vorzug ist/sind das erste und zweite Element und/oder die Messstrecken so angeordnet und/oder werden die Biegungen so erfasst, dass das zweite Element und/oder die Messstrecken nicht entlang einer gedachten Linie parallel zur Längserstreckung der Brücke, in welcher das erste Element und/oder eine erste Messstrecke angeordnet ist, angeordnet ist und/oder so angeordnet sind, dass die Messstecken und/oder Elemente parallel, insbesondere senkrecht zur Längserstreckung der Brücke und/oder des Elements versetzt angeordnet sind/werden. Eine solche Anordnung kann beispielsweise dadurch vereinfacht werden, dass das erste Element und das zweite Element und/oder die Messstrecken parallel zueinander der Längserstreckung der Brücke angeordnet sind und insbesondere in Längsrichtung der Brücke auf einem gleichen Teilabschnitt der Brücke befindet, wobei ein Teilabschnitt ein zur Längserstreckung der Brücke orthogonal verlaufender Abschnitt der Brücke ist. Eine solche Anordnung kann beispielsweise zusätzlich oder alternativ dadurch vereinfacht werden, dass ausgehend von einem ersten Erfassungsursprungsort die ersten Biegungen des ersten und von einem zweiten zweiten Biegungen und zweiten Elements erfasst werden, wobei der erste Erfassungsursprungsort nicht dem zweiten Erfassungsursprungsort entspricht, und insbesondere der erste und zweite Erfassungsursprungsort sich insbesondere auf einem gleichen Teilabschnitt der Brücke befinden. Bevorzugt kann beispielsweise zur Erfassung der Biegung ein Laser eingesetzt werden, wobei bei mindestens zwei Erfassungsursprungsorten somit zwei Laseranordnungen vorhanden sind, welche jeweils die Biegung jeweils eines Elements erfassen. Aus der Betrachtung mittels mindestens zweier nicht in einer gedachten Linie entlang der Längserstreckung des Elements und/oder der Brücke befindlichen Elemente und/oder Messstrecken und/oder durch die Verwendung mindestens zweier Messstrecken, insbesondere an einem Element und/oder mindestens zwei Elemente, die gemeinsam eine Segment der Brücke tragen und/oder stützen lässt sich besonders einfach eine Torsion des Elements, des Segments und/oder der Brücke in dem Verfahren, der Verwendung und/oder bei dem System bestimmen. Hierfür eignet sich beispielsweise die Betrachtung von und/oder der Verhältnisse von Biegungen an zwei Elementen und/oder zwei Messstrecken eines Elements der Brücke zueinander. Im Falle nicht paralleler und/oder nicht gleich langer Messstrecken können die durch die unterschiedlichen Messstrecken erfassten Werte der Biegungen zueinander normalisiert werden.

Mit Vorzug wird/ist in dem Verfahren und/oder in dem System eine Fourier Analyse, insbesondere eine schnelle Fourier-Transformations (FFT) Analyse, der erfassten und gespeicherten Biegungen und/oder minimalen Biegungen durchgeführt/durchführbar. Durch eine Fourier Analyse, insbesondere FFT-Analyse, der erfassten Biegungen können beispielsweise die unterschiedlichen Ursachen/Gründe der Auslenkung des mindestens einen Elements der Brücke bzw. deren Frequenz sichtbar gemacht und/oder getrennt werden. Dabei kann z. B. die Eigenfrequenz der Brücke bzw. der Elemente der Brücke bzw. die Dreh- und/oder Biegeeigenschwingung der Brücke bzw. mindestens eines Elements der Brücke, insbesondere als lokale Maxima der Amplituden der FFT, und/oder deren Veränderung über die Zeit sichtbar gemacht bzw. ermittelt bzw. analysiert werden, insbesondere können nicht auf äußere Einflüsse, wie Temperatur, zurückzuführende Veränderungen ermittelt und beispielsweise zur Stabilitätsbestimmung und/oder Verkehrsregelung verwendet werden.

So ist es möglich die erfassten Biegungen mittels eines Tief-, Hoch- und/der Bandpasses, insbesondere mittels FFT, zu filtern, insbesondere um bestimmte Einflüsse aus den Biegungen zu entfernen oder nur bestimmte Einflüsse weiter zu betrachten. So kann ein solcher Bandpass beispielsweise verwendet werden, um vor der Ermittlung von Mittelwerten und/oder minimalen Biegungen die erfassten Biegungen von bestimmten Einflüssen zu bereinigen, beispielsweise Eigenschwingungen des Elements und/oder äußeren Einflüssen wie Temperaturschwankungen.

Mit Vorteil können mithilfe einer Fourier Transformations-, insbesondere die schnellen Fourier Transformations- (FFT-), Analyse aus den ermittelten minimalen Biegungen und/oder den erfassten und gespeicherten Biegungen die Charakteristika, insbesondere die Frequenzen, der Biegungen und/oder der Auslenkungen und der damit verbundenen Kraft auf das Element ermittelt werden. Mit Vorteil werden mittels der Fourier Transformations-, insbesondere FFT-, Analyse wiederholt die ermittelten minimalen Biegungen und/oder den erfassten und gespeicherten Biegungen und/oder von Teilmengen analysiert und Charakteristika, insbesondere die Frequenzen, der Biegungen und/oder der Auslenkungen und der damit verbundenen Kraft auf das Element bzw. deren Frequenz ermittelt. Aus den mithilfe der FFT-Analyse gewonnenen Frequenzen lässt sich unter anderem beispielsweise die Zwangsanregung des Elements durch den Verkehr, die Erregung der Längsschwingung der Brücke und/oder die Erregung der Querschwingung der Brücke erkennen/ermitteln. Mit Vorzug werden wiederholt rückschauend die Ergebnisse, insbesondere die ermittelten Frequenzen, insbesondere die lokalen Maxima der Amplituden der Frequenzen, der Fourier Transformations-, insbesondere der FFT-, Analyse innerhalb unterschiedlicher Zeitintervalle miteinander verglichen. Hierbei hat sich herausgestellt, dass sich aufgrund von Temperaturschwankungen an der Brücke, Strukturveränderungen der Brücke und/oder anderen Ereignissen die Frequenzen der Biegungen an den Elementen verschieben. Mit Vorzug wird daher aufgrund des Vergleichs unterschiedlicher Fourier-Tranformations-, insbesondere FFT-, analysierter erfasster Biegungen und/oder ermittelter minimalen Biegungen innerhalb unterschiedlicher Zeitintervalle auf eine vorherrschende Temperatur, eine Strukturänderung und/oder andere Ereignisse rückgeschlossen, und insbesondere die erfasste und gespeicherte Biegung und/oder die ermittelte minimale Biegung hinsichtlich der Auswirkungen durch die Temperatur korrigiert.

Mit Vorzug ist/wird das Verfahren und/oder die Verwendung und/oder ist das System geeignet ohne eine Sperrung der Brücke und/oder Verkehrslücke (von auf der Brücke befindlichen Fahrzeugen, Landfahrzeugen) und/oder des Elements und/oder unabhängig von definierten Lasten auf den Elementen und/oder der Brücke durchführbar und/oder durchgeführt und/oder ist das System dazu eingerichtet. Mit Vorzug ist das Verfahren und/oder die Verwendung im laufenden Betrieb der Brücke, insbesondere während Fahrzeuge, insbesondere Landfahrzeuge sich an, unter und/oder auf der Brücke und/oder dem Element bewegen, insbesondere ohne Einschränkungen der sich bewegenden Objekte und/oder Fahrzeuge, insbesondere ohne Verkehrsregelung, durchführbar und/oder wird es so durchgeführt und/oder ist das System dazu eingerichtet.

Dazu ist es insbesondere nicht erforderlich, dass die Brücke auch nicht einem Teilabschnitt oder insgesamt gesperrt werden muss. Insbesondere wird/ist das Verfahren im laufenden Verkehrsbetrieb und/oder unter wechselnder Verkehrslast durchführbar/durchgeführt und/oder ist das System dazu eingerichtet. Insbesondere werden im Verfahren und/oder bei der Verwendung Biegungen erfasst und gespeichert, die während Verkehrslücken und während des Ausschwingens des Elements durch die Nachwirkung der Verkehrslast und rückschauend als minimale Biegungen ermittelt und/oder ist das System dazu eingerichtet.

Mit Vorteil wird das Verfahren, die Verwendung und/oder ist das System so durchgeführt bzw. eingerichtet, dass basierend auf der Ermittlung minimaler Biegungen, Torsionen und/oder anderen aus den Biegungen und/oder minimalen Biegungen abgeleiteter Werte eine Verkehrsregelung des Verkehrs auf der Brücke und/oder dem Element durchgeführt wird, insbesondere um die Verkehrslast zu beeinflussen und/oder die Sicherheit auf der Brücke zu gewährleiste und/oder die Brücke bei Erreichen mindestens eines vorbestimmten Grenzwertes zu sperren. Insbesondere wird das Verfahren durchgeführt, die Verwendung durchgeführt und/oder ist das System geeignet, ohne eine Verkehrslücke und/oder ohne ein Ausschwingen der durch Verkehrslast verursachten Schwingung angewandt zu werden, insbesondere ohne eine solche, die ein Ausschwingen der Brücke oder des Elements, vollständig oder zu mindestens 80% der Schwingungsamplitude bei Beginn der Verkehrslücke oder von mindestens 1 min Dauer.

Insbesondere sind alternativ minimale Biegungen dadurch erkannt und/oder sind sie dadurch gegeben und/oder definiert, dass eine erfasste Biegung des Elements eine Auslenkung in Richtung der Vertikalen nach unten eine vorgegebene Minimalauslenkung, insbesondere von maximal 0,1 ‰ bis 0,7‰ der Längserstreckung und/oder frei tragenden Länge der Längserstreckung des Elements, nicht überschreitet und/oder innerhalb eines vorgegebenen Minimalzeitfensters, insbesondere vor und/oder nach der erfassten Biegung, mit einer Länge von insbesondere 1s bis 59 Sekunden keine geringere Biegung erfasst wurde und/oder die Schwankung der erfassten Biegungen zumindest über ein vorgegebenes Minimalzeitfenster mit einer Länge von insbesondere 1s bis 59 Sekunden weniger als 1 % der minimalen Biegung beträgt und/oder die erfasste Biegung in einem Intervall von +/- 10% der n vorausgehenden und/oder nachfolgenden ermittelten minimalen Biegungen liegt, wobei n = 1 oder größer ist, insbesondere zwischen 1 und 100 liegt.

Ein Vergleich der minimalen Biegungen kann beispielsweise in einer einfachen Differenzbestimmung zwischen minimalen Biegungen und/oder aus diesen bestimmten Werten, in einer Regression und/oder relativen Gegenüberstellung liegen. Der Vergleich muss nicht unmittelbar erfolgen, vielmehr ist auch eine zwischenzeitliche Umrechnung oder Weiterbehandlung der minimalen Biegungen vor dem eigentlichen Vergleich denkbar.

Mit besonderen Vorteil ist/wird das Verfahren unabhängig eine(r/s) bekannten Nulllage und/oder unbelasteten Zustandes ausführbar und/oder aufstellbar und/oder verwendet.

Mit besonderem Vorteil ist die kontinuierliche und kontaktlose Erfassung der Biegung des mindestens eines Elements durch die Erfassung einer horizontalen Auslenkung des Elements und/oder mit diesem fest verbundenen Teils, insbesondere Messziel (Target). Insbesondere wird mittels einer parallel zur Längserstreckung des Elements, insbesondere parallel zur Fahrtrichtung auf dem Element, angeordneten kontaktlosen Messstrecke die Verschiebung zwischen einer, insbesondere ortsfesten, Messstelle und einem am Brückensegment angebrachten Messziel (Target) als Biegung erfasst.

Insbesondere handelt es sich bei dem Element der Brücke um ein Brückensegment und/oder einen -abschnitt.

Die Entwicklung einer Brückenstruktur kann im Zeitverlauf insbesondere in drei Abschnitten erfolgen. In den ersten 12 bis 18 Monaten zeigt sich üblicherweise das Setzungsverhalten in Form einer exponentiellen Abnahme der "Setzungsungsgeschwindigkeit" als Steigung einer Kurve der Biegung bei konstanter Belastung und/oder der minimalen Biegung im Zeitverlauf (Kurve dargestellt durch Verlauf der Biegung aufgetragen gegen die Zeit). In der anschließenden Betriebszeit zeigt sich üblicherweise ein linearer Anstieg der Biegung bei konstanter Belastung und/oder der minimalen Biegung, der zum Nutzungsende hin wiederum in einen exponentiellen Anstieg der Biegung bei konstanter Belastung und/oder der minimalen Biegung übergeht.

Vorteilhafterweise wird, insbesondere wiederholt, eine zeitliche Entwicklung der minimalen Biegungen oder einer Teilmenge der minimalen Biegungen, ermittelt, insbesondere nach jeder rückschauenden Ermittlung minimaler Biegungen. Insbesondere wird bei Veränderung der zeitlichen Entwicklung der minimalen Biegungen, insbesondere von einer linearen Entwicklung weg, insbesondere hin zu einer exponentiellen Entwicklung und/oder einem exponentiellen Anstieg, eine Benachrichtigung und/oder eine Regelung des Verkehrsflusses über die Brücke durchgeführt und/oder bei Veränderung der zeitlichen Entwicklung der Minima, abweichend von einer vorherigen Entwicklung, eine Benachrichtigung und/oder eine Regelung des Verkehrsflusses über die Brücke durchgeführt. Dadurch lässt sich die Brücke optimal ausnutzen und/oder die Nutzungszeit verlängern bzw. maximieren ohne ein unkalkulierbares Risiko einzugehen. Auch lassen sich Wartungs- und/oder Reparaturzeitpunkte und/oder -arbeiten optimal bestimmen.

Mit besonderem Vorteil ist das Verfahren dadurch gekennzeichnet, dass die Temperatur kontinuierlich erfasst und gespeichert wird. Dies kann insbesondere Teil in einer Schwingungsgleichung sein, die durch Regression an die Messwerte angepasst wird. Auch kann eine Temperaturnormierung der Messwerte und/oder der minimalen Biegungen anhand der gemessenen Temperaturen erfolgen.

Für Brücken oder deren Bauteile können näherungsweise Formeln, insbesondere Schwingungsgleichungen, angegeben werden, die deren Verhalten unter einer (zeitabhängigen) Schwingungsanregung, beispielsweise durch Verkehrslast beschreiben. Durch Kenntnis der Biegung, minimalen Biegung und/oder zeitabhängigen Verkehrslast und der zeitabhängigen Veränderung der Biegung mindestens eines Elementes der Brücke können die Parameter einer solchen Formel angepasst werden. Hier können beispielsweise bekannte Regressionsverfahren eingesetzt werden.

Die Analyse kann beispielsweise in Bezug auf eine Strukturveränderung, die Alterung, die Festigkeit bzw. die Standfestigkeit der Brücke durchgeführt werden. Die Änderung der minimalen Biegungen und/oder deren Entwicklung über die Zeit kann als Indiz für diese Parameter verwendet werden. Durch die kontinuierliche Erfassung ist es hierbei insbesondere möglich die Nutzungsdauer der Brücke zu verlängern, da die Belastungsgrenze und Restnutzungsdauer (zeitlich) genauer definiert werden kann, da das Bauwerksverhalten zusätzlich erfasst wird und rechnerisch mit einem Modell verifizierbar wird.

Dadurch ist ein Verfahren zur Analyse und/oder Überwachung von Brücken, ein System und eine Verwendung angegeben, dass sich auch bei nicht entsprechend präparierten Brücken ohne umfangreiche Nachrüstungen realisieren lässt. Auch ist es wartungsarm und zuverlässig.

Mit besonderem Vorteil ist die kontinuierliche und kontaktlose Erfassung der Biegung des mindestens eines Elements dadurch gekennzeichnet, dass diese die Verschiebung zwischen einer, insbesondere ortsfesten, Messstelle und einem am Brückensegment angebrachten Messziel als Biegung erfasst wird. Dies wird insbesondere mittels einer parallel zur Längserstreckung des Elements, insbesondere parallel zur Fahrtrichtung auf dem Element, angeordneten kontaktlosen Messstrecke und der horizontalen Auslenkung des Elements, insbesondere Brückensegmentes, verwirklicht.

Mit besonderem Vorteil ist das Verfahren dadurch gekennzeichnet, dass die zeitliche Entwicklung der minimalen Biegung erfasst wird. Diese minimalen Biegungen können insbesondere rückschauend miteinander verglichen werden.

Mit besonderem Vorteil wird die Brücke und/oder das Element zumindest einmalig während der kontinuierlichen und kontaktlosen Erfassung der Biegung des mindestens eines Elements der Brücke mit einem bekannten Gewicht von mindestens 10 Tonnen, insbesondere mindestens 30 Tonnen, belastet und insbesondere die dabei gemessene Biegung und das bekannte Gewicht zur Kalibrierung einer Gleichung und/oder eines Models, insbesondere zur Verkehrslastenüberwachung, genutzt.

Mit besonderem Vorteil wird die kontinuierliche und kontaktlose Erfassung der Biegung des mindestens eines Elements, insbesondere die erfasste Biegung, zur Verkehrslastüberwachung genutzt wird, insbesondere nach Kalibrierung einer Gleichung und/oder eines Models betreffend die Verkehrslast durch zumindest einmaliges Belasten des mindestens einen Elements der Brücke mit einem bekannten Gewicht von mindestens 10 Tonnen, insbesondere mindestens 30 Tonnen, während der kontinuierlichen und kontaktlosen Erfassung der Biegung des mindestens eines Elements.

Mit besonderem Vorteil werden mindestens 10 minimale Biegungen miteinander und/oder minimale Biegungen, welche innerhalb eines Zeitraums von mindestens 48 Stunden ermittlet wurden, verglichen und/oder betreffend solcher die Entwicklung bestimmt.

Mit besonderem Vorteil wird beim Ermitteln einer minimalen Biegungen, welche eine geringere Biegung aufweist als mindestens eine ermittelte frühere minimale Biegung, die ermittelte frühere minimale Biegung mit der stärkeren Biegung, durch die erfasste minimale Biegungen ersetzt und/oder die ermittelte frühere minimale Biegung mit stärkerer Biegungen verworfen.

Mit besonderem Vorteil handelt es sich bei dem mindestens einen Element der Brücke um ein lang gestrecktes Element, insbesondere mit einem lang gestreckten Hohlraum, und oder um ein mit seiner Längserstreckung horizontal angeordnetes Element, insbesondere um ein einen Freiraum, insbesondere freitragend, überspannendes Element.

Gelöst wird die Aufgabe auch durch ein System zur Analyse und/oder Überwachung von Brücken, insbesondere für Landfahrzeuge, wobei die Brücke insbesondere mindestens einen Fahrspurabschnitt einer Fahrspur aufweist, und das System mindestens eine Biegungsüberwachungsvorrichtung zur kontinuierlichen und kontaktlosen Erfassung der Biegung mindestens eines Elementes der Brücke aufweist und aufweisend ein Auswertesystem zur Speicherung der erfassten Biegungen und zur wiederholten rückschauenden Ermittlung minimaler Biegungen aus den gespeicherten Biegungen und zum wiederholten Vergleich von zumindest Teilmengen der ermittelten minimalen Biegungen mit einander.

Insbesondere ist das System und/oder die Auswertevorrichtung, insbesondere zusammen mit den weiteren Bestandteilen des Systems, eingerichtet ein erfindungsgemäßes Verfahren, wie oben geschildert, durchzuführen. Auch in Bezug auf die weitere Durchführung und Ausgestaltung gelten obige Ausführungen entsprechend. Die geschilderten vorteilhaften Verfahrensmerkmale lassen sich entsprechend auf das System übertragen.

Insbesondere weist die Biegungsüberwachungsvorrichtung eine parallel zur Längserstreckung des Elements, insbesondere parallel zur Fahrtrichtung auf dem Element, angeordnete kontaktlose Messstrecke zur Erfassung der Verschiebung zwischen einer, insbesondere ortsfesten, Messstelle und einem am Brückensegment angebrachten Messziel als Biegung auf.

Mit Vorteil ist die Biegungsüberwachungsvorrichtung eingerichtet Biegungen mit einem maximalen Abstand von aufeinander folgenden Messwerten von maximal 360 s, insbesondere maximal 60 s, zu erfassen.

Insbesondere handelt es sich bei dem mindestens einen Element der Brücke um ein lang gestrecktes Element, insbesondere mit einem lang gestreckten Hohlraum, und/oder, um ein mit seiner Längserstreckung horizontal angeordnetes Element, insbesondere ein einen Freiraum, insbesondere frei tragend, überspannendes Element.

Gelöst wird die Aufgabe auch durch eine Verwendung von Minima der Biegung eines Elementes einer Brücke zur Erkennung von Strukturveränderungen des Elementes und/oder zur Regelung einer Belastung des Elementes, insbesondere durch Regelung eines Verkehrsflusses über das Element. Insbesondere erfolgt die Verwendung unter Einsatz eines erfindungsgemäßen Systems und/oder eines erfindungsgemäßem Verfahrens oder Teilaspekten und/oder -schritten dessen. Die geschilderten vorteilhaften Verfahrensmerkmale lassen sich entsprechend auf die Verwendung übertragen.

In Bezug auf die weitere Ausgestaltung gelten obige Ausführungen entsprechend.

Weitere Vorteile und Merkmale der Erfindung ergeben sich aus der nachstehenden Beschreibung eines nach dem erfindungsgemäßen Verfahrens durchgeführte Überwachung und Analyse einer Brücke anhand der beigefügten Figuren. Dabei zeigen:

Fig. 1     Schematische Darstellung einer Messeanordnung, wobei vier Elemente der Brücke überwacht werden und deren Auslenkungen als Biegung erfasst wird.

Fig. 2     Erfasste Biegungen an zwei in jeweils unterschiedlichen Abschnitten der Brückebefindlichen Elementen einer Brücke innerhalb eines auf der der X-Achse aufgetragenen gemeinsamen Zeitintervalls.

Fig.3    Erfasste Biegungen an zwei in einem gleichen Abschnitt der Brücke befindlichen Elementen einer Brücke innerhalb eines auf der der X-Achse aufgetragenen gemeinsamen Zeitintervalls.

Die Figuren sind rein schematisch und beschränken sich in ihrer Darstellung auf die wesentlichen und für das Verständnis der Erfindung wichtigen Bestandteile des Verfahrens bzw. die aus diesem Verfahren gewonnenen Daten.

In den Figuren sind gleiche Elemente mit gleichen Bezugzeichen versehen.

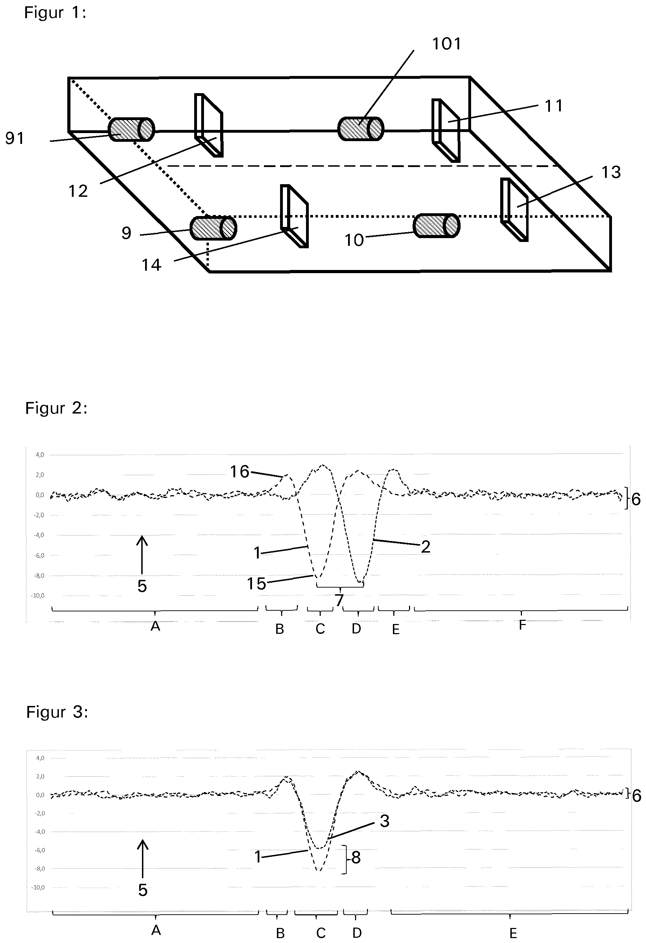

In Figur 1 ist eine schräge Seitenansicht einer Brücke dargestellt (äußerer Kasten), wobei die Brücke insgesamt vier Elemente aufweist (nicht gekennzeichnet). Die Längerstreckung der Brücke läuft von links nach rechts in der Figur. An jedem Element ist ein Target 11, 12, 13, 14 angeordnet ist, wobei die Elemente zu Target 11 und 12 in Längserstreckung der Brücke hintereinander angeordnet sind. Das Element zu Target 13 ist zu dem Element zu Target 11 senkrecht zur Längserstreckung beabstandet und zu diesem parallel. Das Element zu Target 14 ist zu dem Element zu Target 12 senkrecht zur Längserstreckung beabstandet und zu diesem parallel. Die Auslenkung der Elemente wird jeweils mittels einer Messeanordnung erfasst, wobei die Messeanordnung aus einem Laser 9 und einem Target 14, einem Laser 91 und einem Target 12, einem Laser 101 und einem Target 11, einem Laser 10 und einem Target 13 gebildet ist und wobei sich zwischen dem Laser und dem Target jeweils die Messstrecke erstreckt.

In Fig. 2 sind Biegungen 1, 2 eines ersten 11 und zweiten Elements 12 einer Brücke, wie in Figur 1 schematisch skizziert, dargestellt, welche innerhalb des gleichen Zeitintervalls erfasst und gespeichert wurden, wobei die Brücke nicht gesperrt war und die Brücke Verkehrslast ausgesetzt war. Dabei ist das Element 11 und das Element 12 in jeweils einem anderen Abschnitt mit einer Entfernung in Längsrichtung der Brücke zwischen den Elementen der Targets 11 und 12 der Brücke angeordnet. Die Auslenkung eines jeden Elements wurde mithilfe einer Laseranordnung als eine Abweichung der Messdistanz zwischen einem Ausgangspunkt 91, 101, an welchem der Laser angeordnet/aufgestellt ist, und dem Target Element 11, 12 kontinuierlich gemessen. In einem ersten Abschnitt (A) sind innerhalb eines vorbestimmten Zeitintervalls nur geringe Auslenkungen, insbesondere geringe Auslenkung in Relation zu dem Mittelwert bzw. gleitenden Durchschnitt der erfassten Biegungen in dem Zeitintervall und deren Abweichungen 6 zueinander, vorhanden. Diese Biegungen werden zur Ermittlung mindestens einer minimalen Biegung 5 des Elements des Targets 11 und 12 verwendet. Im weiteren Verlauf weist die Biegung 1 des Elements des Targets 11 eine vom Mittelwert und/oder der Ruhelage positive Auslenkung und gleichzeitig die Biegung 2 des Elements des Targets 12 eine kleinere vom Mittelwert und/oder der Ruhelage negative Auslenkung auf. Im weiteren zeitlichen Verlauf ist daraufhin erfasst, dass das Element des Targets 11 eine vom Mittelwert und/oder der Ruhelage negative erfasste Biegung 1 und das Element des Targets 12 eine vom Mittelwert und/oder der Ruhelage positive Biegung 2 aufweist. Während des erfindungsgemäßen Verfahrens wird aufgrund der rückschauenden und wiederholten Betrachtung der erfassten Biegungen 1 bzw. 2 mindestens eine minimale Biegung 5 ermittelt. Die minimalen Biegungen 5 sind dadurch gekennzeichnet, dass diese nur geringe Abweichungen vom Mittelwert und/oder der Ruhelage innerhalb dieses ersten Abschnitts A des zeitlichen Verlaufs aufweisen.

Das erste lokale Maximum der Biegung 1 des Elements des Targets 11, welches einen Wert oberhalb der vorherigen Schwankungsbreite der Biegung 1 aufweist und die darum erfassten Messwerte, die oberhalb der vorherigen Schwankungsbreite der Biegung 1 liegen, werden dabei bei der Ermittlung der minimalen Biegung 5 ausgeschlossen.

Ebenso werden das darauf folgende lokale Minimum und die darum erfassten Messwerte, die unterhalb der vorherigen Schwankungsbreite der Biegung 1 liegen bei der Betrachtung der minimalen Biegung 5 nicht herangezogen.

Zu erkennen ist in diesem Diagramm der Figur 2, dass ein Landfahrzeug auf der Brücke sich zunächst dem Element des Targets 11 nähert und bevor es das Element des Targets 11 erreicht an dem Element eine Auslenkung nach oben hervorruft wird. Bei direkter Beanspruchung des Elements des Targets 11 durch das Landfahrzeug bzw. maximaler vertikaler Kraftbeaufschlagung des Elements durch das Landfahrzeug erfolgte eine Auslenkung nach unten. Die im weiteren Verlauf gezeigten Biegungen stellen dabei Restschwingungen aufgrund dieser Belastung dar. Da das Element des Targets 12 in Fahrtrichtung des Landfahrzeuges nach dem Element des Targets 11 angeordnet ist, zeigt dieses Element eine zeitversetzte Reaktion.

Durch den zeitlichen Versatz 7 des Einsatzes des lokalen Minimums der Biegungen zwischen dem Element der Targets 11 und Element 12 kann auf eine Geschwindigkeit des Landfahrzeuges rückgeschlossen werden, wenn der Abstand zwischen dem Beginn der Elemente der Targets 11 und 12 bekannt ist.

In Fig. 3 ist die Biegung 1 des Elements des Targets 11 und die Biegung 3 des Elements des Targets 13 der Figur 1 dargestellt, welche innerhalb des gleichen Zeitintervalls erfasst und gespeichert wurden, wobei die Brücke nicht gesperrt war und die Brücke einer Verkehrslast ausgesetzt war. Dabei tagen die Elemente der Targets 11 und 12 gemeinsam ein Segment der Brücke. Zusätzlich zu den minimalen Biegungen 5 kann mit den Biegungen, die jeweils das globale Minimum der erfassten Biegungen 1 bzw. 3 des Elements des Targets 11 bzw. 13 darstellen, und deren relativem Unterschied 8, insbesondere einem Vergleich solcher Unterschiede 8 im Laufe mehrere Betrachtungen solcher maximalen bzw. minimalsten Auslenkungen, die Torsion des von den Elementen der Targets 11 und 13 getragenem Segment bestimmt werden.

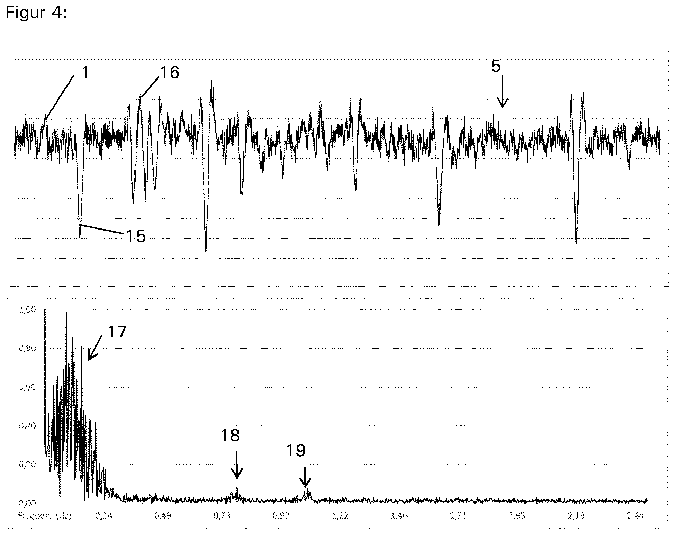

Fig. 4 zeigt im oberen Bereich ein Spektrum erfasster Biegungen 1 des Elements des Targets 11 der Brücke. Dabei sind unterschiedlich starke Auslenkungen/Biegungen 1 bzw. unterschiedlich große lokale Minima/Maxima 15, 16 zwischen ermittelten minimalen Biegungen 5 innerhalb des Zeitintervalls zu erkennen. Im unteren Bereich der Figur 4 ist eine FFT-Analyse des oberen Spektrums dargestellt. Ersichtlich sind hohe Amplituden des Spektrums im niedrigen Frequenzbereich 17 und zwei relativ hohe Amplituden des Spektrums in einem größeren Frequenzbereich 18, 19. Dabei kann aufgrund der niedrigen Frequenzen des erste Frequenzbereichs 17 der erste Frequenzbereichs 17 einer Zwangsanregung der Brücke und/oder des Elements des Targets 11 der Brücke durch eine Verkehrslast zugeordnet werden. Der zweite Frequenzbereich 18 und der dritte Frequenzbereich 19 kann der Längsschwingung bzw. der Querschwingung des Elements des Targets 11 zugeordnet werden. Der zweite Frequenzbereich 18 und dritte Frequenzbereich 19 bzw. ihre Lage im Spektrum sind in der Regel abhängig von der Struktur der Brücke sowie äußerer Bedingungen, wie beispielsweise der Umgebungstemperatur. Durch Vergleiche mehrere FFT-Analysen von unterschiedlichen Zeiträumen oder Teilmengen der erfassten Biegungen kann auf Strukturveränderung des Elements und/oder der Brücke und/oder ein Ereignis, wie z. B. eine Anprall eines dritten Objekt auf die Brücke und/oder das Element, geschlossen werden. Auch könen Sie zur Filterung der erfassten Biegungen dienen, beispielsweise um die Einflüsse der äußeren Bedingungen, insbesondere der Temperatur aus den erfassten Biegungen herauszufiltern.

Bezugszeichenliste

| | |
|---|---|
| 1 | Biegung des ersten Elements |
| 2 | Biegung des zweiten Elements |
| 3 | Biegung des dritten Elements |
| 4 | Biegung des vierten Elements |
| 5 | Bereich einer minimalen Biegung |
| 6 | Abweichung zwischen Biegungen des ersten, zweiten, dritten und/oder vierten Elements |
| 7 | Abweichung zwischen Biegungen eines ersten und dritten Elements |
| 8 | Abweichung zwischen Biegungen eines ersten und zweiten Elements |
| 9 | Laser |
| 91 | Laser |
| 10 | Laser |
| 101 | Laser |
| 11 | Target des Ersten Elements |
| 12 | Target des Zweites Element |
| 13 | Target des Drittes Element |
| 14 | Target des Viertes Element |
| 15 | Lokales Minimum |
| 16 | Lokales Maximum |
| 17 | Erster Frequenzbereich |
| 18 | Zweiter Frequenzbereich |
| 19 | Dritter Frequenzbereich |

**Patentansprüche**

1. Verfahren zur Analyse und/oder Überwachung von Brücken für Landfahrzeuge, wobei eine Biegung als eine Auslenkung mindestens eines Elements der Brücke, insbesondere unter Verkehrslast, kontinuierlich und kontaktlos erfasst wird und die erfassten Biegungen gespeichert werden
und

wobei wiederholt, insbesondere rückschauend, minimale Biegungen aus den gespeicherten Biegungen ermittelt werden, wobei eine minimale Biegung eine Biegung ist, welche im Vergleich zu anderen Biegungen während eines Zeitintervalls eine kleine bzw. kleinere Auslenkung aufweist, und wobei die minimale Biegungen mittels eines dynamischen Mittelwertes erfasster Biegungen ermittelt werden, wobei die Ermittlung des dynamischen Mittelwerts iterativ, rückschauend und/oder wiederholt auf eine Teilmenge von erfassten Biegungen aus allen erfassten Biegungen basiert, wobei die Teilmenge mittels einer Betrachtung aller erfassten Biegungen und deren Verlauf und/oder Abweichungen zueinander und/oder zu einem Mittelwert aller erfassten Biegungen innerhalb des Zeitintervall und/oder einer Teilmenge bestimmt wird, wobei solche erfassten Biegungen nicht Teil der Teilmenge sind, die Werte aufweisen, die oberhalb und/oder unterhalb mindestens einer vorbestimmten Spanne um den Mittelwert liegen, und wobei insbesondere wiederholt zumindest Teilmengen der ermittelten minimalen Biegungen miteinander verglichen werden wobei bei Unterschreiten einer minimalen Anzahl von ermittelten minimalen Biegungen und/oder einer vorgegebenen Mindestfrequenz ermittelter minimaler Biegungen und/oder Überschreiten einer vorgegebenen Zeitspanne seit der letzten ermittelten minimalen Biegung und/oder zwischen zwei ermittelten minimalen Biegungen eine Benachrichtigung und/oder eine Regelung des Verkehrsflusses über die Brücke erfolgt.

2. Verfahren nach Anspruch 1, wobei die kontinuierliche und kontaktlose Erfassung der Biegung des mindestens einen Elements die horizontale Auslenkung eines Elements, insbesondere Brückensegmentes, ist und mittels einer parallel zur Längserstreckung des Elements, insbesondere parallel zur Fahrtrichtung auf dem Element, angeordneten kontaktlosen Messstrecke die Verschiebung zwischen einer, insbesondere ortsfesten, Messstelle und einem am Brückensegment angebrachten Messziel als Biegung erfasst wird.

3. Verfahren nach einem der vorstehenden Ansprüche, wobei eine zeitliche Entwicklung der minimalen Biegungen erfasst wird und insbesondere bei Veränderung der zeitlichen Entwicklung der minimalen Biegungen, insbesondere von einer linearen Entwicklung weg, insbesondere hin zu einer exponentiellen Entwicklung, eine Benachrichtigung und/oder eine Regelung des Verkehrsflusses über die Brücke erfolgt und/oder wobei bei Veränderung der zeitlichen Entwicklung der Minima, abweichend von einer vorherigen Entwicklung, eine Benachrichtigung und/oder eine Regelung des Verkehrsflusses über die Brücke erfolgt.

4. Verfahren nach einem der vorstehenden Ansprüche, wobei auch die Temperatur kontinuierlich erfasst und gespeichert wird und insbesondere die Biegungen und/oder minimalen Biegungen um den Einfluss durch die Temperatur bereinigt werden.

5. Verfahren nach dem vorstehenden Anspruch, wobei bei Überschreiten einer vorgegebenen Biegung eine Benachrichtigung und/oder eine Regelung des Verkehrsflusses über die Brücke erfolgt.

6. Verfahren nach einem der vorstehenden Ansprüche, wobei das mindestens eine Element der Brücke zumindest einmalig während der kontinuierlichen und kontaktlosen Erfassung der Biegung des mindestens eines Elements der Brücke mit einem bekannten Gewicht von mindestens 10 Tonnen belastet wird und insbesondere die dabei erfasste Biegung und das bekannte Gewicht zur Kalibrierung einer Gleichung und/oder eines Models, insbesondere zur Verkehrslastenüberwachung genutzt werden und/oder die kontinuierlichen und kontaktlose Erfassung der Biegung des mindestens eines Elements, insbesondere die erfasste Biegung, zur Verkehrslastüberwachung genutzt wird.

7. Verfahren nach einem der Vorstehenden Ansprüche, wobei die Biegungen und/oder minimalen Biegungen von Einflüssen äußerer Bedingungen, insbesondere der Temperatur, bereinigt und/oder mittels FFT gefiltert werden.

8. Verfahren nach einem der vorstehenden Ansprüche, wobei bei Unterschreiten einer minimalen Anzahl von ermittelten minimalen Biegungen innerhalb einer vorgegebenen Zeitspanne eine Benachrichtigung erfolgt.

9. Verfahren nach einem der vorstehenden Ansprüche, wobei mindestens zwei Biegungen als Auslenkungen mindestens zweier Elemente der Brücke kontinuierlich und kontaktlos erfasst werden und/oder wobei mindestens zwei Biegungen eines Elements der Brücke kontaktlos erfasst werden und die erfassten Biegungen gespeichert werden und wobei, insbesondere wiederholt rückschauend und/oder mittels dynamischer Mittelwerte, für jede der mindestens zwei Biegungen minimale Biegungen aus den gespeicherten Biegungen ermittelt wird und/oder die mindestens zwei erfassten Biegungen, insbesondere ihr Zeitverlauf, miteinander verglichen werden/wird, insbesondere zur Ermittlung einer Torsion, eines unterschiedlichen Verhaltens der Elemente und/oder einer Geschwindigkeit einer Verkehrslast und/oder einer Kalibrierung mindestens einer Messstrecke

10. Verfahren nach einem der vorstehenden Ansprüche, wobei zwischen dem Erfassen von aufeinander folgenden Messwerten der kontinuierlichen Erfassung maximal 360 s, insbesondere maximal 60 s, liegen.

11. Verfahren nach einem der vorstehenden Ansprüche, wobei es sich bei dem mindestens einen Element der Brücke um ein lang gestrecktes Element, insbesondere mit einem lang gestreckten Hohlraum, handelt und/oder, wobei es sich bei dem mindestens einen Element der Brücke um ein mit seiner Längserstreckung horizontal angeordnetes Element handelt.

12. Verfahren nach einem der vorstehenden Ansprüche, wobei aus der Entwicklung der minimalen Biegung auf die Entwicklung einer Strukturveränderung und/oder Alterung des Elementes geschlossen wird.

13. System zur Analyse und/oder Überwachung von Brücken für Landfahrzeuge, wobei die Brücke mindestens einen Fahrspurabschnitt einer Fahrspur aufweist, aufweisend mindestens eine Biegungsüberwachungsvorrichtung zur kontinuierlichen und kontaktlosen Erfassung der Biegung mindestens eines Elements der Brücke, insbesondere unter Verkehrslast, und aufweisend ein Auswertesystem zur Speicherung der erfassten Biegungen und zur wiederholten Ermittlung minimaler Biegungen aus den gespeicherten Biegungen, wobei eine minimale Biegung eine Biegung ist, welche im Vergleich zu anderen Biegungen während eines Zeitintervalls eine kleine bzw. kleinere Auslenkung aufweist, und wobei die minimale Biegungen mittels eines dynamischen Mittelwertes erfasster Biegungen ermittelt werden, wobei die Ermittlung des dynamischen Mittelwerts iterativ, rückschauend und/oder wiederholt auf eine Teilmenge von erfassten Biegungen aus allen erfassten Biegungen basiert, wobei die Teilmenge mittels einer Betrachtung aller erfassten Biegungen und deren Verlauf und/oder Abweichungen zueinander und/oder zu einem Mittelwert aller erfassten Biegungen innerhalb des Zeitintervall und/oder einer Teilmenge bestimmt wird, wobei solche erfassten Biegungen nicht Teil der Teilmenge sind, die Werte aufweisen, die oberhalb und/oder unterhalb mindestens einer vorbestimmten Spanne um den Mittelwert liegen, und zum wiederholten Vergleich von zumindest Teilmengen der ermittelten minimalen Biegungen mit einander
wobei bei Unterschreiten einer minimalen Anzahl von ermittelten minimalen Biegungen und/oder einer vorgegebenen Mindestfrequenz ermittelter minimaler Biegungen und/oder Überschreiten einer vorgegebenen Zeitspanne seit der letzten ermittelten minimalen Biegung und/oder zwischen zwei ermittelten minimalen Biegungen eine Benachrichtigung und/oder eine Regelung des Verkehrsflusses über die Brücke erfolgt.

**Claims**

1. A method for analysing and/or monitoring bridges for land vehicles, wherein a bend is continuously and contactlessly detected as a deflection of at least one element of the bridge, in particular under traffic load, and the detected bends are stored, and

   wherein minimum bends are repeatedly determined, in particular retrospectively, from the stored bends, wherein a minimum bend is a bend which, in comparison with other bends, has a small or in particular retrospectively, minimum bends being determined from the stored bends, a minimum bend being a bend which has a small or smaller deflection in comparison with other bends during a time interval, and the minimum bends being determined by means of a dynamic mean value of detected bends, the determination of the dynamic mean value being based iteratively, retrospectively and/or repeatedly on a subset of detected bends from all detected bends, the subset being determined by means of a consideration of all detected bends and their profile and/or deviations from one another and/or from a mean value of all detected bends within the time interval and/or a subset,
   wherein such detected bends are not part of the subset which have values which lie above and/or below at least one predetermined range around the mean value, and wherein in particular at least subsets of the determined minimum bends are repeatedly compared with one another,
   wherein, if the number of determined minimum bends falls below a minimum number and/or the frequency of determined minimum bends falls below a predetermined minimum frequency and/or a predetermined time period since the last determined minimum bend and/or between two determined minimum bends is exceeded, a notification and/or a control of the traffic flow over the bridge takes place.

2. The method according to claim 1, wherein the continuous and contactless detection of the bending of said at least one element is the horizontal deflection of an element, in particular bridge segment, and by means of a contactless measuring section arranged parallel to the longitudinal extension of the element, in particular parallel to the direction of travel on the element, the displacement between a, in particular stationary, measuring point and a measuring target attached to the bridge segment is detected as bending.

3. The method according to one of the preceding claims, wherein a temporal development of the minimum bends is detected and, in particular, when the temporal development of the minimum bends changes, in particular away from a linear development, in particular towards an exponential development, a notification and/or a control of the traffic flow over the bridge takes place and/or wherein, when the temporal development of the minima changes, deviating from a previous development, a notification and/or a control of the traffic flow over the bridge takes place.

4. The method according to any one of the preceding claims, wherein the temperature is also continuously recorded and stored and, in particular, the bends and/or minimum bends are adjusted for the influence by the temperature.

5. The method according to the preceding claim, wherein when a predetermined bend is exceeded, notification and/or control of traffic flow across the bridge is effected.

6. The method according to one of the preceding claims, wherein said at least one element of the bridge is loaded with a known weight of at least 10 tons at least once during the continuous and contactless detection of the bending of said at least one element of the bridge, and in particular the bending detected thereby and the known weight are used for calibrating an equation and/or a model, in particular for traffic load monitoring, and/or the continuous and contactless detection of the bending of said at least one element, in particular the detected bending, is used for traffic load monitoring.

7. The method according to any one of the preceding claims, wherein the bends and/or minimum bends are cleaned from influences of external conditions, in particular temperature, and/or filtered by means of FFT.

8. The method according to any one of the preceding claims, wherein, if the number of determined minimum bends falls below a minimum number of bends

9. The method according to one of the preceding claims, wherein at least two bends are continuously and contactlessly detected as deflections of at least two elements of the bridge and/or wherein at least two bends of an element of the bridge are detected contactlessly and the detected bends are stored and wherein, in particular repeatedly in retrospect and/or by means of dynamic mean values, for each of said at least two bends, minimum bends are determined from the stored bends and/or said at least two detected bends, in particular their variation over time, are/is compared with one another, in particular for determining a torsion, a different behaviour of the elements and/or a speed of a traffic load and/or a calibration of at least one measuring section.

10. The method according to one of the preceding claims, wherein a maximum of 360 s, in particular a maximum of 60 s, lies between the acquisition of successive measured values of the continuous acquisition.

11. The method according to any one of the preceding claims, wherein said at least one element of the bridge is an elongated element, in particular having an elongated cavity, and/or,
wherein said at least one element of the bridge is an element arranged with its longitudinal extension horizontal.

12. The method according to any one of the preceding claims, wherein the development of the minimum bending is used to infer the development of a structural change and/or aging of the element.

13. A system for the analysis and/or monitoring of bridges for land vehicles, the bridge having at least one lane section of a lane, having at least one bending monitoring device for the continuous and contactless detection of the bending of at least one element of the bridge, in particular under traffic load, and having an evaluation system for the storage of the detected bends and for the repeated determination of minimum bends from the stored bends, a minimum bend being a bend which has a small or smaller deflection in comparison with other bends during a time interval, and the minimum bends being determined by means of a dynamic mean value of detected bends, the determination of the dynamic mean value being carried out iteratively, retrospectively and/or repeatedly on a subset of the detected bends, **characterized in that** smaller deflection compared to other bends during a time interval, and wherein the minimum bends are determined by means of a dynamic mean value of detected bends, wherein the determination of the dynamic mean value is based iteratively, retrospectively and/or repeatedly on a subset of detected bends from all detected bends, wherein the subset is determined by means of a consideration of all detected bends and their course and/or deviations from one another and/or from a mean value of all detected bends within the time interval and/or a subset, wherein such detected bends are not part of the subset, which have values which lie above and/or below at least one predetermined range around the mean value, and for the repeated comparison of at least subsets of the determined minimum bends with one another, wherein, if the number of determined minimum bends falls below a minimum number and/or a predetermined minimum frequency of determined minimum bends and/or a predetermined time period since the last determined minimum bend and/or between two determined minimum bends is exceeded, a notification and/or a regulation of the traffic flow over the bridge takes place.

**Revendications**

1. Procédé d'analyse et/ou de contrôle de ponts pour véhicules terrestres, dans lequel un virage est détecté en continu et sans contact comme une déviation d'au moins un élément du pont, en particulier sous la charge du trafic, et les virages détectés sont stockés, et

dans lequel des courbes minimales sont déterminées de manière répétée, en particulier rétrospectivement, à partir des courbes stockées, dans lequel une courbe minimale est une courbe qui, en comparaison avec d'autres courbes, présente une déviation faible ou en particulier rétrospective, des courbes minimales étant déterminées à partir des courbes stockées, une courbe minimale étant une courbe qui présente une déviation faible ou plus faible en comparaison avec d'autres courbes pendant un intervalle de temps, et les courbes minimales étant déterminées au moyen d'une valeur moyenne dynamique de courbes détectées, la détermination de la valeur moyenne dynamique étant basée de manière itérative, rétrospective et/ou répétée sur un sous-ensemble de courbes détectées parmi toutes les courbes détectées, le sous-ensemble étant déterminé au moyen d'une considération de toutes les courbes détectées et de leur profil et/ou de leurs écarts les uns par rapport aux autres et/ou par rapport à une valeur moyenne de toutes les courbes détectées dans l'intervalle de temps et/ou un sous-ensemble,

dans lequel de telles courbures détectés ne font pas partie du sous-ensemble qui a des valeurs qui se trouvent au-dessus et/ou au-dessous d'au moins une plage prédéterminée autour de la valeur moyenne, et dans lequel en particulier au moins des sous-ensembles des courbures minimales déterminées sont comparés de manière répétée les uns avec les autres,

dans lequel, si le nombre de virages minimums déterminés est inférieur à un nombre minimum et/ou si la fréquence des virages minimums déterminés est inférieure à une fréquence minimum prédéterminée et/ou si une période de temps prédéterminée depuis le dernier virage minimum déterminé et/ou entre deux virages minimums déterminés est dépassée, une notification et/ou un contrôle du flux de trafic sur le pont a lieu.

2. Procédé selon la revendication 1, dans lequel la détection continue et sans contact de la flexion dudit au moins un élément est la déviation horizontale d'un élément, en particulier un segment de pont, et au moyen d'une section de mesure sans contact disposée parallèlement à l'extension longitudinale de l'élément, en particulier parallèlement à la direction de déplacement sur l'élément, le déplacement entre un point de mesure, en particulier stationnaire, et une cible de mesure fixée au segment de pont est détecté comme une flexion.

3. Procédé selon l'une des revendications précédentes, dans lequel une évolution temporelle des minima est détectée et, en particulier, lorsque l'évolution temporelle des minima change, notamment en s'écartant d'une évolution linéaire, notamment en se rapprochant d'une évolution exponentielle, une notification et/ou une commande du flux de trafic sur le pont a lieu et/ou dans lequel, lorsque l'évolution temporelle des minima change, en s'écartant d'une évolution précédente, une notification et/ou une commande du flux de trafic sur le pont a lieu.

4. Procédé selon l'une quelconque des revendications précédentes, dans lequel la température est également enregistrée et stockée en continu et, en particulier, les coudes et/ou les coudes minimaux sont ajustés pour l'influence de la température.

5. Procédé selon la revendication précédente, dans lequel, lorsqu'un virage prédéterminé est dépassé, une notification et/ou un contrôle du flux de trafic sur le pont est effectué.

6. Procédé selon l'une des revendications précédentes, dans lequel ledit au moins un élément du pont est chargé avec un poids connu d'au moins 10 tonnes au moins une fois pendant la détection continue et sans contact de la flexion dudit au moins un élément du pont, et en particulier la flexion détectée ainsi et le poids connu sont utilisés pour calibrer une équation et/ou un modèle, en particulier pour la contrôle de la charge du trafic, et/ou la détection continue et sans contact de la flexion dudit au moins un élément, en particulier la flexion détectée, est utilisée pour la contrôle de la charge du trafic.

7. Procédé selon l'une quelconque des revendications précédentes, dans lequel les coudes et/ou les coudes minimaux sont nettoyés des influences des conditions extérieures, en particulier de la température, et/ou filtrés au moyen d'une FFT.

8. Procédé selon l'une quelconque des revendications précédentes, dans lequel, si le nombre de coudes minimaux déterminés est inférieur à un nombre minimal de coudes.

9. Procédé selon l'une des revendications précédentes, dans lequel au moins deux courbures sont détectées en continu et sans contact en tant que déviations d'au moins deux éléments du pont et/ou dans lequel au moins deux courbures d'un élément du pont sont détectées sans contact et les courbures détectées sont mémorisées et dans lequel, en particulier de manière répétée rétrospectivement et/ou au moyen de valeurs moyennes dynamiques, pour chacune desdites au moins deux courbures, des courbures minimales sont déterminées à partir des courbures mémorisées et/ou lesdites au moins deux courbures détectées, en particulier leur variation dans le temps, sont comparées entre elles, en particulier pour déterminer une torsion, un comportement différent des éléments et/ou une vitesse d'une charge de trafic et/ou un calibrage d'au moins une section de mesure.

10. Procédé selon l'une des revendications précédentes, dans lequel un maximum de 360 s, en particulier un maximum de 60 s, s'écoule entre l'acquisition de valeurs mesurées successives de l'acquisition continue.

11. Procédé selon l'une quelconque des revendications précédentes, dans lequel ledit au moins un élément du pont est un élément allongé, notamment présentant une cavité allongée, et/ou,
dans lequel ledit au moins un élément du pont est un élément disposé avec son extension longitudinale horizontale.

12. Procédé selon l'une quelconque des revendications précédentes, dans lequel l'évolution de la flexion minimale est utilisée pour déduire l'évolution d'un changement structurel et/ou du vieillissement de l'élément.

13. Système d'analyse et/ou de contrôle de ponts pour véhicules terrestres, le pont comportant au moins une section de voie de circulation, comportant au moins un dispositif de contrôle de la flexion pour la détection continue et sans contact de la flexion d'au moins un élément du pont, en particulier sous la charge du trafic, et comportant un système d'évaluation pour la mémorisation des flexions détectées et pour la détermination répétée de flexions minimales à partir des flexions mémorisées, un coude minimal étant un coude qui présente une déviation faible ou plus faible par rapport à d'autres coudes pendant un intervalle de temps, et les coudes minimaux étant déterminés au moyen d'une valeur moyenne dynamique de coudes détectés, la détermination de la valeur moyenne dynamique étant effectuée de manière itérative, rétrospective et/ou répétée sur un sous-ensemble des coudes détectés, **caractérisé par** une déviation plus faible par rapport à d'autres coudes pendant un intervalle de temps, et dans lequel les coudes minimaux sont déterminés au moyen d'une valeur moyenne dynamique de coudes détectés, dans lequel la détermination de la valeur moyenne dynamique est basée de manière itérative, rétrospective et/ou répétée sur un sous-ensemble de coudes détectés parmi tous les coudes détectés, dans lequel le sous-ensemble est déterminé au moyen d'une considération de tous les coudes détectés et de leur parcours et/ou de leurs écarts les uns par rapport aux autres et/ou par rapport à une valeur moyenne de tous les coudes détectés à l'intérieur de l'intervalle de temps et/ou d'un sous-ensemble, dans lequel de tels coudes détectés ne font pas partie du sous-ensemble, qui ont des valeurs qui se trouvent au-dessus et/ou au-dessous d'au moins une plage prédéterminée autour de la valeur moyenne, et pour la comparaison répétée d'au moins des sous-ensembles des virages minimums déterminés les uns avec les autres, dans lequel, si le nombre de virages minimums déterminés tombe en dessous d'un nombre minimum et/ou d'une fréquence minimum prédéterminée de virages minimums déterminés et/ou d'une période de temps prédéterminée depuis le dernier virage minimum déterminé et/ou entre deux virages minimums déterminés est dépassé, une notification et/ou une régulation du flux de trafic sur le pont a lieu.

Figur 1:

Figur 2:

Figur 3:

Figur 4:

**EP 3 665 463 B1**

**IN DER BESCHREIBUNG AUFGEFÜHRTE DOKUMENTE**

**In der Beschreibung aufgeführte Patentdokumente**

- US 20150198502 A
- US 2015226633 A1